# EUROPEAN PATENT APPLICATION

(11) **EP 4 369 712 A1**
(43) Date of publication of application: **15.05.2024**
(21) Application number: 21954509.2
(22) Date of filing: 25.08.2021
(51) Int. Cl.: H04N 19/30, H04N 19/46

(54) **VIDEO TRANSMISSION METHOD AND APPARATUS, AND ELECTRONIC DEVICE**

(71) Applicant: Huawei Technologies Co., Ltd., Shenzhen, Guangdong 518129 (CN)
(72) Inventor: LIU, Kang, Shenzhen, Guangdong 518129 (CN); LIU, Guoen, Shenzhen, Guangdong 518129 (CN); LI, Xing, Shenzhen, Guangdong 518129 (CN)
(74) Representative: Pfenning, Meinig & Partner mbB
(86) International application number: PCT/CN2021/114468
(87) International publication number: WO 2023/023969

(57) **Abstract**

This application provides a video transmission method and apparatus, and an electronic device. According to the method, a change trend of an available channel capacity on a channel for transmitting video data may be monitored, and a quantity of layers for performing layered coding on the video data is dynamically adjusted based on the change trend of the available channel capacity, so that when the available channel capacity is changed, it can be ensured that at least data included in a base layer in at least one frame of data in the video data can be transmitted. This ensures that a video receive end can smoothly play the video data, avoids a phenomenon, for example, frame skipping, erratic display, or frame freezing that occurs at the video receive end, and improves user experience.

## Description

### TECHNICAL FIELD

This application relates to the field of wireless communication technologies, and in particular, to a video transmission method and apparatus, and an electronic device.

### BACKGROUND

With rapid development of wireless communication technologies, wireless networks greatly improve convenience of people's life and work. However, due to limited resources of a wireless network, some troubles may also be brought when the wireless network is used. For example, when video data is transmitted in the wireless network, because the wireless network fluctuates, and a quantity of users accessing the wireless network is random, a capacity of the wireless network that can be used by each user accessing the wireless network is not constant and fluctuates. Consequently, a delay of video data transmission is varying, and a video receive end cannot obtain the video data in time when the delay is long. When the video receive end cannot obtain the video data in time, a phenomenon, for example, frame skipping, erratic display, and frame freezing, usually occurs at the video receive end, so that the user cannot watch a video smoothly, and experience is poor.

### SUMMARY

This application provides a video transmission method and apparatus, and an electronic device, to dynamically adjust a quantity of layers for layered coding of video data based on a change trend of an available channel capacity on a video data transmission channel, so that when the available channel capacity is changed, it can be ensured that data included in at least one frame of data in the video data can be transmitted. This ensures that a video receive end can smoothly play the video data, avoids a phenomenon, for example, frame skipping, erratic display, or frame freezing that occurs at the video receive end, and improves user experience.

According to a first aspect, this application provides a video transmission method. The method may include: obtaining a change trend of an available channel capacity on a first channel, where the first channel is used to transmit video data; adjusting, based on the change trend of the available channel capacity, a quantity of layers during layered coding of at least one frame of data in the video data; performing layered coding on the at least one frame of data based on a quantity of layers obtained after adjustment; and outputting coded data obtained through layered coding. In this way, when the change trend of the available channel capacity on the video data transmission channel is obtained, the quantity of layers during layered coding of the video data is dynamically adjusted based on the change trend of the available channel capacity, so that when the available channel capacity is changed, it can be ensured that at least data included in a base layer of the at least one frame of data in the video data can be transmitted. This ensures that a video receive end can smoothly play the video data, avoids a phenomenon, for example, frame skipping, erratic display, or frame freezing that occurs at the video receive end, and improves user experience.

In a possible implementation, the adjusting, based on the change trend of the available channel capacity, a quantity of layers during layered coding of at least one frame of data specifically includes: when the available channel capacity trends to decrease, increasing the quantity of layers during layered coding of the at least one frame of data; and when the available channel capacity trends to increase, decreasing the quantity of layers during layered coding of the at least one frame of data, or keeping the quantity of layers during layered coding of the at least one frame of data unchanged. In this way, when the available channel capacity trends to decrease, the quantity of layers during layered coding is increased, to decrease a data amount of a base layer, thereby ensuring that the base layer can be successfully transmitted, and meeting a requirement of basic image transmission without a frame loss. When the available channel capacity tends to increase, the quantity of layers during layered coding is decreased, to decrease a total data amount of the at least one frame of data, and improve transmission efficiency of the video data. Because each layer of data obtained by performing layered coding on the at least one frame of data includes data such as matching control information and some redundant information, after the quantity of layers for layered coding of the at least one frame of data is decreased, as the quantity of layers is decreased, the data such as the matching control information and the some redundant information is also removed, thereby decreasing the total data amount of the at least one frame of data. In addition, when the available channel capacity tends to increase, the quantity of layers during layered coding of the at least one frame of data may also be kept unchanged, to improve stability during layered coding.

In a possible implementation, the method further includes: increasing or decreasing, based on a preset adjustment amount, the quantity of layers during layered coding of the at least one frame of data. In this way, in a process of adjusting the quantity of layers during layered coding, adjustment may be performed based on the preset adjustment amount, thereby improving adjustment efficiency.

In a possible implementation, the method further includes: adding identification information to each layer of layered coded data obtained through layered coding. The identification information is used to distinguish between different layered coded data. In this way, different layered coded data is distinguished by using the identification information, so that each layer of coded data may be independently encapsulated into a data packet (which may also be referred to as a data frame unit) subsequently.

In a possible implementation, the identification information includes a layer identifier of the layered coded data and a first data amount of the layered coded data. In this way, different layers of layered coded data may be distinguished by using the layer identifier, and after the layer identifier is obtained, statistics may be collected on an obtained data amount of data by using the first data amount. When the obtained data amount is the same as the first data amount, it may be determined that one layer of layered coded data has been obtained, and the layer of layered coded data may be independently encapsulated.

In a possible implementation, the identification information includes a header identifier and a tail identifier of the layered coded data. In this way, after the header identifier and the tail identifier are obtained, it may be determined that one layer of layered coded data has been obtained, so that data (namely, the layer of layered coded data) obtained between the header identifier and the tail identifier may be independently encapsulated.

In a possible implementation, the outputting coded data obtained through layered coding specifically includes: writing the coded data obtained through layered coding into preset storage space. The preset storage space may be accessed by a channel coding apparatus. In this way, after a source coding apparatus completes data coding, the channel coding apparatus may obtain the layered coded video data.

In a possible implementation, the outputting coded data obtained through layered coding specifically includes: sending the coded data obtained through layered coding to a data cache apparatus. The data cache apparatus may be accessed by a channel coding apparatus. In this way, after a source coding apparatus completes data coding, the channel coding apparatus may obtain the layered coded video data.

In a possible implementation, the outputting coded data obtained through layered coding specifically includes: directly sending the coded data obtained through layered coding to a source coding apparatus. In this way, after the source coding apparatus completes data coding, a channel coding apparatus may obtain the layered coded video data.

According to a second aspect, this application provides a video transmission method. The method may include: obtaining coded data obtained by performing layered coding on video data, where the coded video data includes at least one layer of layered coded data, each layer of the at least one layer of layered coded data includes identification information, and the identification information is used to distinguish between different layered coded data; independently encapsulating, into a first data packet based on the identification information, coded data belonging to a same layer of coded data; and sending the first data packet. In this way, after the coded data obtained by performing layered coding on the video data is obtained, each layer of coded data may be independently encapsulated into a data packet (which may also be referred to as a data frame unit), and the data packet is separately sent. This can ensure that cross-layer packet composition does not occur between different layered coded data, and can also ensure that cross-frame packet composition does not occur between different frames. Further, it can be ensured that each layer of coded data can be separately sent, and a channel needs to be contended for only once when one layer of layered coded data is sent. This avoids a case in which total transmission duration of one layer of layered coded data is excessively large because the channel needs to be contended for a plurality of times when one layer of layered coded data is sent during cross-layer packet composition, and reduces a probability of data sending timeout. In addition, because each layer of layered coded data is sent as an independent data packet, a pressure of a receive buffer of a video receive end is reduced, so that a case in which the video receive end receives some data at a layer first and then receives remaining data at an interval of an unspecified delay does not exist. This improves buffer utilization. In addition, each layer of layered coded data obtained through layered coding is independently encapsulated and sent. This avoids a case in which a failure of sending one layer of data causes a failure of sending data at another layer during synchronous sending of different layers of data. In this way, a data sending success rate is improved, and it is further ensured that the video receive end can smoothly play the video data.

In a possible implementation, the identification information includes a layer identifier of the layered coded data and a first data amount of the layered coded data. The independently encapsulating, into a first data packet based on the identification information, coded data belonging to a same layer of layered coded data specifically includes: after the layer identifier is obtained, when a data amount of first coded data obtained after the layer identifier reaches the first data amount, independently encapsulating, into the first data packet, the first coded data obtained after the layer identifier. In this way, different layered coded data is distinguished by using the identification information, so that each layer of coded data may be independently encapsulated into a data packet (which may also be referred to as a data frame unit) subsequently, to obtain the first data packet. For example, when the first coded data is independently encapsulated into the first data packet, the layer identifier may be encapsulated together, or the layer identifier may not be encapsulated together. This may be specifically determined according to an actual situation, and is not limited herein.

In a possible implementation, the identification information includes a header identifier and a tail identifier of the layered coded data. The independently encapsulating, into a first data packet based on the identification information, coded data belonging to a same layer of layered coded data specifically includes: after the header identifier and the tail identifier are obtained, independently encapsulating, into the first data packet, coded data obtained after the header identifier is obtained and before the tail identifier is obtained. In this way, after the header identifier and the tail identifier are obtained, it may be determined that one layer of layered coded data has been obtained, so that data (namely, the layer of layered coded data) obtained between the header identifier and the tail identifier may be independently encapsulated, to obtain the first data packet. For example, when the obtained coded data is independently encapsulated into the first data packet, the corresponding header identifier and the corresponding tail identifier may be encapsulated together, or the corresponding header identifier and the corresponding tail identifier may not be encapsulated together. This may be specifically determined according to an actual situation, and is not limited herein.

In a possible implementation, the method further includes: when the channel is obtained through contention, if remaining duration for sending a first frame of data to which the first data packet belongs ends, discarding to-be-sent data in the first frame of data, and sending a next frame of data of the first frame of data through the channel obtained through contention. The first frame of data is any frame of data in the video data. In this way, when the channel is obtained through contention, if the remaining duration for sending the first frame data to which the first data packet belongs ends, the to-be-sent data that is in the first frame of data and that is subsequently sent is considered as invalid data. Therefore, if the to-be-sent data in the first frame of data continues to be sent in this case, the channel is invalidly occupied. Therefore, in this case, the to-be-sent data in the first frame of data may be discarded, and the next frame of data of the first frame of data is sent through the channel obtained through contention, so that invalid occupation of the channel can be avoided, and the next frame of data may be sent earlier. This avoids timeout of sending the next frame of data and improves data transmission efficiency.

In a possible implementation, the method further includes: when the channel is obtained through contention and the next frame of data of the first frame of data is obtained, if the remaining duration for sending the first frame of data to which the first data packet belongs is less than duration for sending the to-be-sent data in the first frame of data, discarding the to-be-sent data in the first frame of data, and sending the next frame of data through the channel obtained through contention. The first frame of data is any frame of data in the video data. In this way, when the channel is obtained through contention, if the remaining duration for sending the first frame of data to which the first data packet belongs is less than the duration for sending the to-be-sent data in the first frame of data, the to-be-sent data that is in the first frame of data and that is subsequently sent definitely times out. Consequently, data sent after timeout is invalid data, and the channel is invalidly occupied when the to-be-sent data in the first frame of data is sent. Therefore, in this case, when the next frame of data of the first frame of data has been obtained, the to-be-sent data in the first frame of data may be discarded, and the next frame of data of the first frame of data is sent through the channel obtained through contention, so that invalid occupation of the channel can be avoided, and the next frame of data may be sent earlier. This avoids timeout of sending the next frame of data and improves data transmission efficiency.

In a possible implementation, the method further includes: when the channel is obtained through contention and the next frame of data of the first frame of data is not obtained, if the remaining duration for sending the first frame of data to which the first data packet belongs is less than duration for sending the to-be-sent data in the first frame of data, discarding the to-be-sent data in the first frame of data, and abandoning the channel obtained through contention this time. In this way, when the channel is obtained through contention, if the remaining duration for sending the first frame of data to which the first data packet belongs is less than the duration for sending the to-be-sent data in the first frame of data, the to-be-sent data that is in the first frame of data and that is subsequently sent definitely times out. Consequently, data sent after timeout is invalid data, and the channel is invalidly occupied when the to-be-sent data in the first frame of data is sent. Therefore, in this case, when the next frame of data of the first frame of data is not obtained, the to-be-sent data in the first frame of data may be discarded. However, after the to-be-sent data in the first frame of data is discarded, because the next frame of data of the first frame of data is not obtained, the channel is wasted. Therefore, the channel obtained through contention may be discarded, that is, a channel resource is allocated to another user. This improves data transmission efficiency on the channel.

According to a third aspect, this application provides a video transmission apparatus. The apparatus may include: a first processing module, configured to obtain a change trend of an available channel capacity on a first channel, where the first channel is used to transmit video data; adjust, based on the change trend of the available channel capacity, a quantity of layers during layered coding of at least one frame of data in the video data; and perform layered coding on the at least one frame of data based on a quantity of layers obtained after adjustment; and a first communication module, configured to output coded data obtained through layered coding.

In a possible implementation, the first processing module is further configured to: when the available channel capacity trends to decrease, increase the quantity of layers during layered coding of the at least one frame of data; and when the available channel capacity trends to increase, decrease the quantity of layers during layered coding of the at least one frame of data, or keep the quantity of layers during layered coding of the at least one frame of data unchanged.

In a possible implementation, the first processing module is further configured to increase or decrease, based on a preset adjustment amount, the quantity of layers during layered coding of the at least one frame of data.

In a possible implementation, the first processing module is further configured to add identification information to each layer of layered coded data obtained through layered coding. The identification information is used to distinguish between different layered coded data.

In a possible implementation, the identification information includes a layer identifier of the layered coded data and a first data amount of the layered coded data; or the identification information includes a header identifier and a tail identifier of the layered coded data.

According to a fourth aspect, this application provides a video transmission apparatus. The apparatus may include: a second processing module, configured to obtain coded data obtained by performing layered coding on video data, where the layered coded video data includes at least one layer of layered coded data, each layer of the at least one layer of layered coded data includes identification information, and the identification information is used to distinguish between different layered coded data; and independently encapsulate, into a first data packet based on the identification information, coded data belonging to a same layer of layered coded data; and a second communication module, configured to send a first data packet.

In a possible implementation, the identification information includes a layer identifier of the layered coded data and a first data amount of the layered coded data. The second processing module is further configured to: after the layer identifier is obtained, when a data volume of first coded data obtained after the layer identifier reaches the first data amount, independently encapsulate, into the first data packet, the first coded data obtained after the layer identifier

In a possible implementation, the identification information includes a header identifier and a tail identifier of layered coded data. The second processing module is further configured to: after the header identifier and the tail identifier are obtained, independently encapsulate, into the first data packet, coded data obtained after the header identifier is obtained and before the tail identifier is obtained.

In a possible implementation, the second processing module is further configured to: when a channel is obtained through contention, if remaining duration for sending a first frame of data to which the first data packet belongs ends, discard to-be-sent data in the first frame of data, and send a next frame of data of the first frame of data through the channel obtained through contention. The first frame of data is any frame of data in the video data.

In a possible implementation, the second processing module is further configured to: when the channel is obtained through contention and the next frame of data of the first frame of data is obtained, if the remaining duration for sending the first frame of data to which the first data packet belongs is less than duration for sending the to-be-sent data in the first frame of data, discard the to-be-sent data in the first frame of data, and send the next frame of data through the channel obtained through contention. The first frame of data is any frame of data in the video data.

In a possible implementation, the second processing module is further configured to: when the channel is obtained through contention and the next frame of data of the first frame of data is not obtained, if the remaining duration for sending the first frame of data to which the first data packet belongs is less than duration for sending the to-be-sent data in the first frame of data, discard the to-be-sent data in the first frame of data, and abandon the channel obtained through contention this time.

According to a fifth aspect, this application provides a video transmission method. The method may include: obtaining a change trend of an available channel capacity on a first channel, where the first channel is used to transmit video data; adjusting, based on the change trend of the available channel capacity, a quantity of layers during layered coding of at least one frame of data in the video data; performing layered coding on the at least one frame of data based on a quantity of layers obtained after adjustment; and outputting at least one frame of data obtained through layered coding.

In a possible implementation, the obtaining a change trend of an available channel capacity on a first channel specifically includes: collecting statistics on a data sending success rate in a video data transmission process; and obtaining the change trend of the available channel capacity based on the success rate.

In a possible implementation, the adjusting, based on the change trend of the available channel capacity, a quantity of layers during layered coding of at least one frame of data in the video data specifically includes: when the available channel capacity trends to decrease, increasing the quantity of layers during layered coding of the at least one frame of data; and when the available channel capacity trends to increase, decreasing the quantity of layers during layered coding of the at least one frame of data, or keeping the quantity of layers during layered coding of the at least one frame of data unchanged.

In a possible implementation, the method further includes: increasing or decreasing, based on a preset adjustment amount, the quantity of layers during layered coding of the at least one frame of data.

In a possible implementation, the outputting at least one frame of data obtained through layered coding specifically includes: encapsulating each layer of layered coded data in the first frame of data into an independent data frame unit, and separately outputting the data frame unit corresponding to each layer of layered coded data in the first frame of data. The first frame of data is any frame of data in the video data.

In a possible implementation, the method further includes: when a channel is obtained through contention, if remaining duration for sending a first frame of data to which the first data packet belongs ends, discarding to-be-sent data in the first frame of data, and sending a next frame of data of the first frame of data through the channel obtained through contention. The first frame of data is any frame of data in the video data.

In a possible implementation, the method further includes: when the channel is obtained through contention and the next frame of data of the first frame of data is obtained, if the remaining duration for sending the first frame of data to which the first data packet belongs is less than duration for sending the to-be-sent data in the first frame of data, discarding the to-be-sent data in the first frame of data, and sending the next frame of data through the channel obtained through contention. The first frame of data is any frame of data in the video data.

In a possible implementation, the method further includes: when the channel is obtained through contention and the next frame of data of the first frame of data is not obtained, if the remaining duration for sending the first frame of data to which the first data packet belongs is less than duration for sending the to-be-sent data in the first frame of data, discarding the to-be-sent data in the first frame of data, and abandoning the channel obtained through contention this time.

In a possible implementation, the method further includes: when layered coding is performed on the at least one frame of data, adding identification information to each layer of layered coded data obtained through layered coding. The identification information is used to distinguish between different layered coded data.

In a possible implementation, the identification information includes a layer identifier of the layered coded data and a first data amount of the layered coded data; or the identification information includes a header identifier and a tail identifier of the layered coded data.

According to a sixth aspect, this application provides a video transmission apparatus, including at least one processor and an interface. The at least one processor obtains program instructions or data through the interface. The at least one processor is configured to execute the program instructions, to implement the method provided in the first aspect, or implement the method provided in the second aspect, or implement the method provided in the fifth aspect.

According to a seventh aspect, this application provides an electronic device, including: at least one memory, configured to store a program; and at least one processor, configured to invoke the program stored in the memory, to perform the method provided in the first aspect and/or the second aspect, or perform the method provided in the fifth aspect.

According to an eighth aspect, this application provides a computer storage medium. The computer storage medium stores instructions. When the instructions are run on a computer, the computer is enabled to perform the method provided in the first aspect, or perform the method provided in the second aspect, or perform the method provided in the fifth aspect.

According to a ninth aspect, this application provides a computer program product including instructions. When the instructions are run on a computer, the computer is enabled to perform the method provided in the first aspect, or perform the method provided in the second aspect, or perform the method provided in the fifth aspect.

It may be understood that, for beneficial effect of the third aspect to the ninth aspect, refer to the related descriptions in the first aspect and the second aspect. Details are not described herein again.

### BRIEF DESCRIPTION OF DRAWINGS

The following briefly describes the accompanying drawings that need to be used in the descriptions of embodiments or a conventional technology.
FIG. 1a is a schematic diagram of an example scenario according to an embodiment of this application;
FIG. 1b is a schematic diagram of another example scenario according to an embodiment of this application;
FIG. 2 is a schematic diagram of example impact of a change of an available channel capacity on data frame transmission according to an embodiment of this application;
FIG. 3 is a schematic diagram of a hardware structure of an example video transmit end according to an embodiment of this application;
FIG. 4 is a schematic flowchart of an example video transmission method according to an embodiment of this application;
FIG. 5 is a schematic diagram of an example of adjusting a quantity of layers of a data frame when an available channel capacity is changed according to an embodiment of this application;
(A) in FIG. 6 is a schematic diagram of an example of transmission performed when a quantity of layers is not dynamically adjusted during layered coding of each frame of data according to an embodiment of this application;

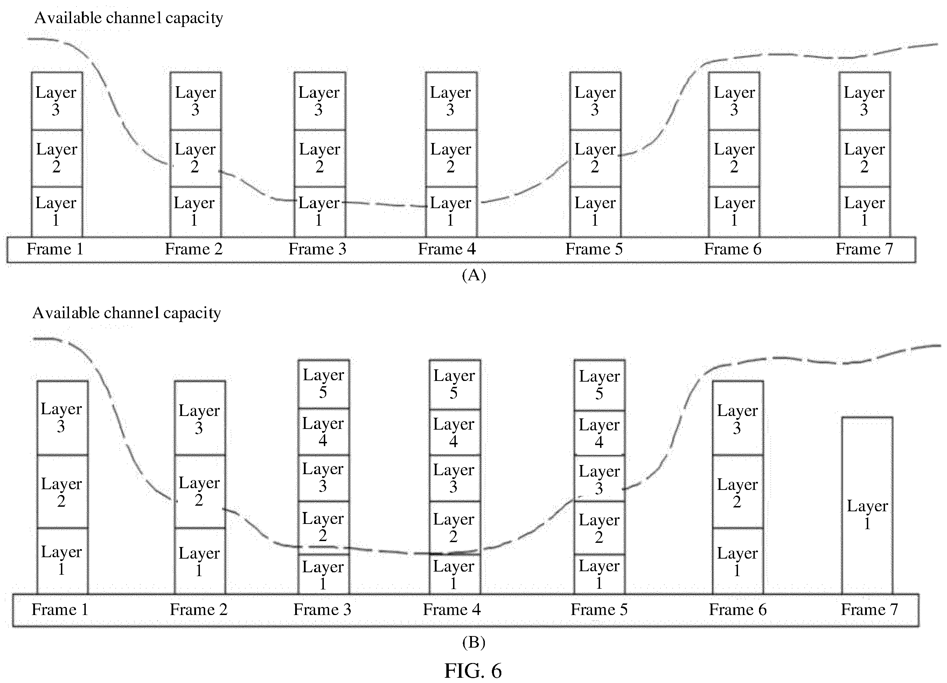

(B) in FIG. 6 is a schematic diagram of an example of transmission performed when a quantity of layers is dynamically adjusted during layered coding of each frame of data according to an embodiment of this application;

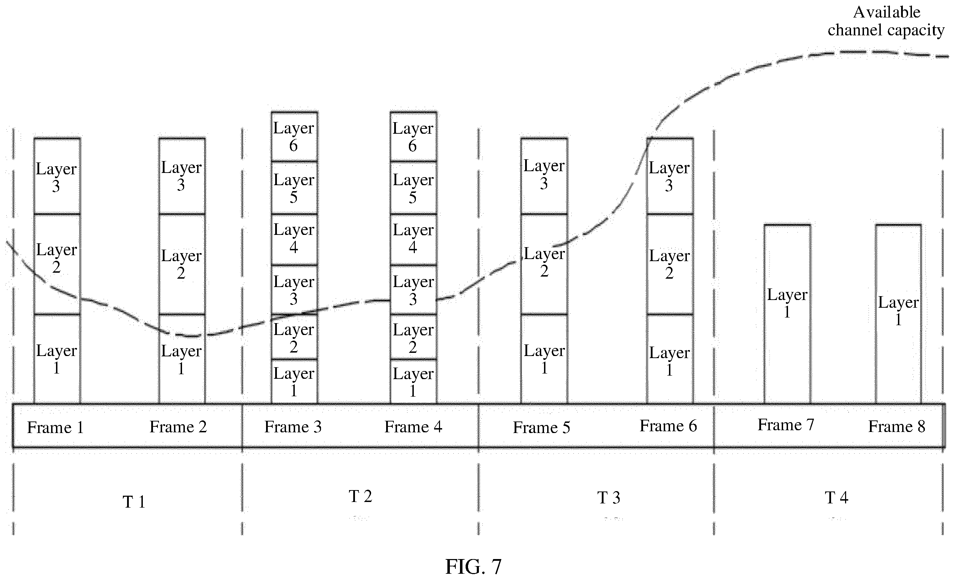

FIG. 7 is a schematic diagram of an example of a process of dynamically adjusting a quantity of layers during layered coding of each frame of data based on a real-time change of an available channel capacity according to an embodiment of this application;

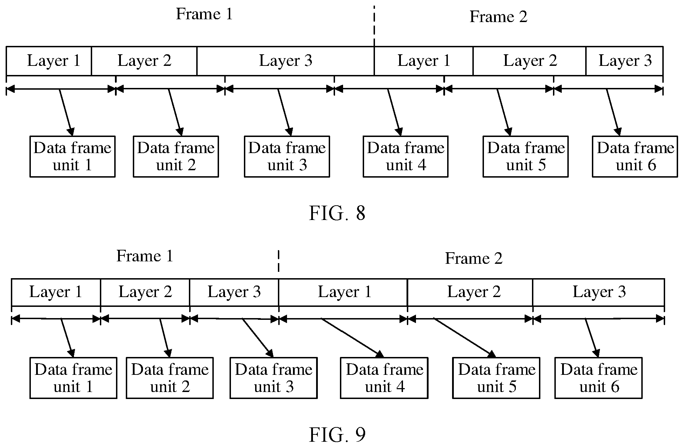

FIG. 8 is a schematic diagram of an example of encapsulating each layer of data in a data frame into a data frame unit according to an embodiment of this application;
FIG. 9 is a schematic diagram of another example of encapsulating each layer of data in a data frame into a data frame unit according to an embodiment of this application;

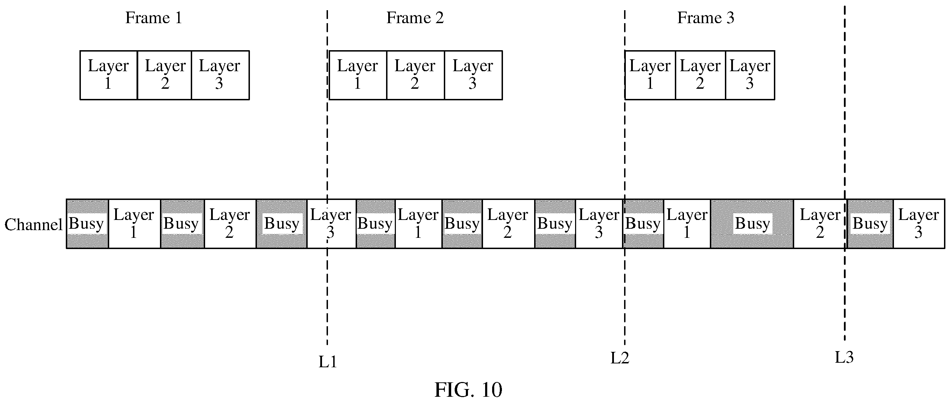

FIG. 10 is a schematic diagram of another example of a process of encapsulating each layer of data in each frame of data into an independent data frame unit for sending according to an embodiment of this application;

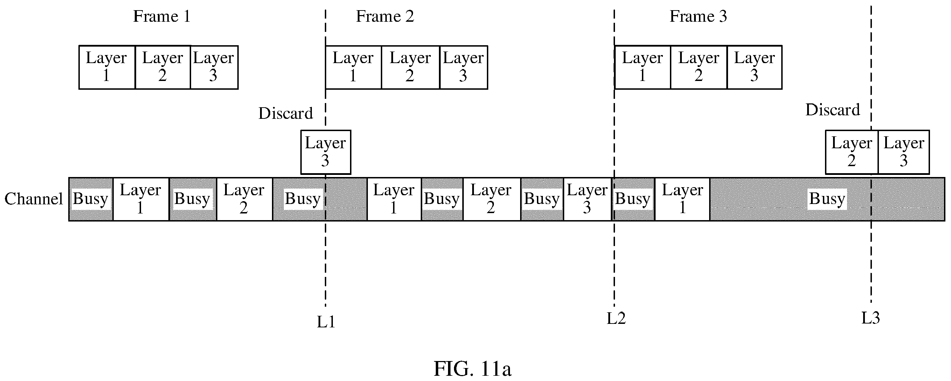

FIG. 11a is a schematic diagram of still another example of a process of encapsulating each layer of data in each frame of data into an independent data frame unit for sending according to an embodiment of this application;

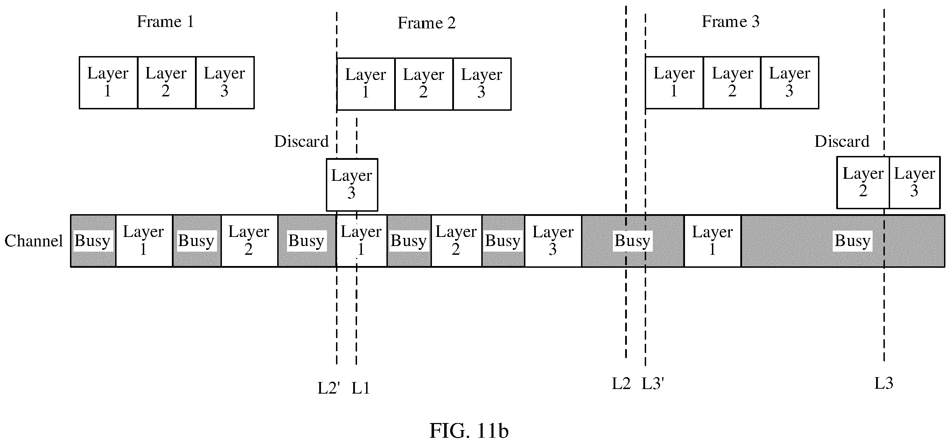

FIG. 11b is a schematic diagram of still another example of a process of encapsulating each layer of data in each frame of data into an independent data frame unit for sending according to an embodiment of this application;

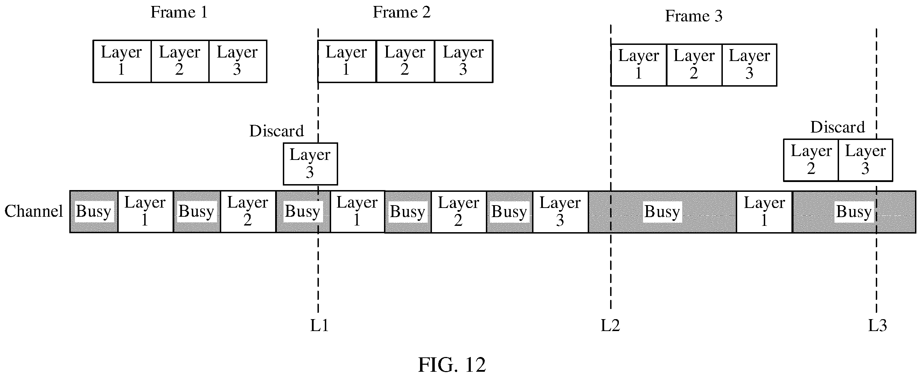

FIG. 12 is a schematic diagram of still another example of a process of encapsulating each layer of data in each frame of data into an independent data frame unit for sending according to an embodiment of this application;

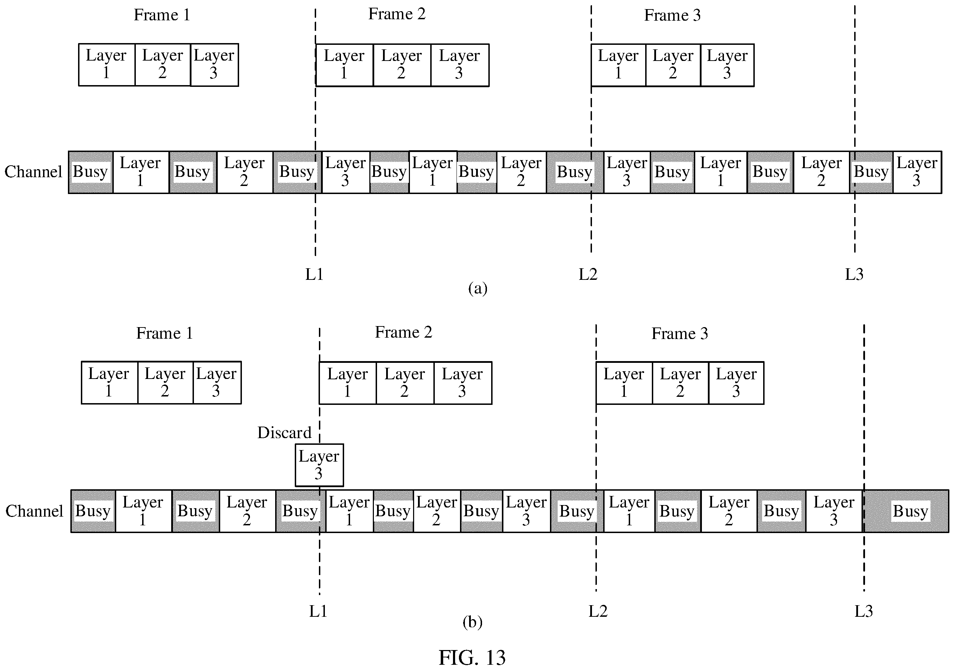

FIG. 13 is a schematic comparison diagram of an example of a process of encapsulating each layer of data in each frame of data into an independent data frame unit for sending according to an embodiment of this application;

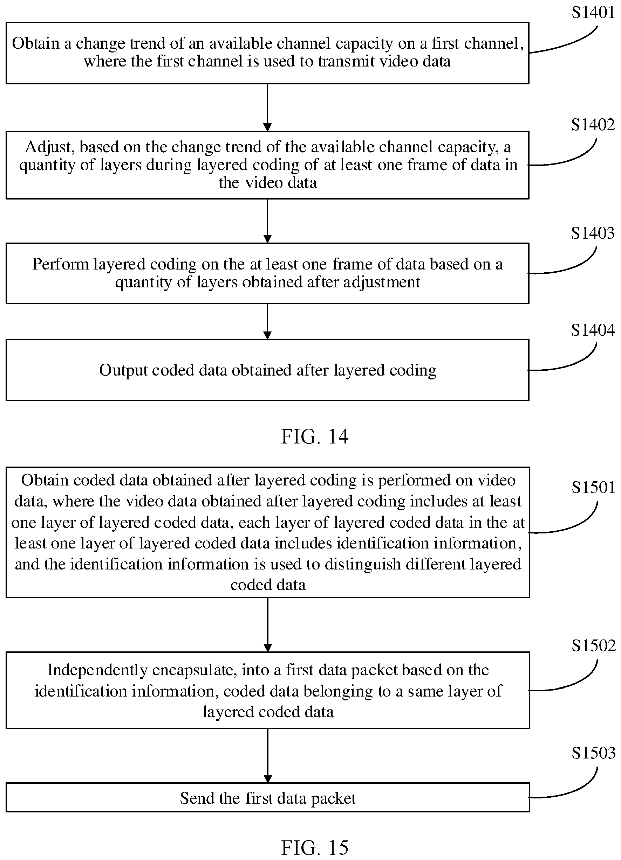

FIG. 14 is a schematic flowchart of another example video transmission method according to an embodiment of this application;
FIG. 15 is a schematic flowchart of another example video transmission method according to an embodiment of this application;

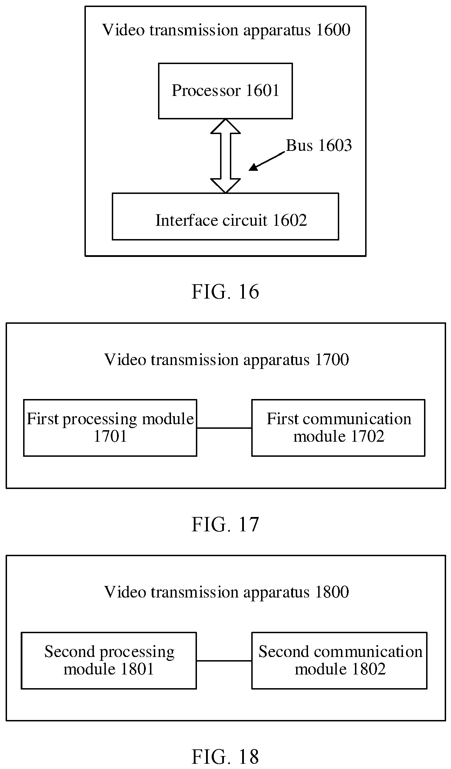

FIG. 16 is a schematic diagram of a structure of an example video transmission apparatus according to an embodiment of this application;
FIG. 17 is a schematic diagram of a structure of another example video transmission apparatus according to an embodiment of this application; and
FIG. 18 is a schematic diagram of a structure of still another example video transmission apparatus according to an embodiment of this application.

### DESCRIPTION OF EMBODIMENTS

To make objectives, technical solutions, and advantages of embodiments of this application clearer, the following describes the technical solutions in embodiments of this application with reference to the accompanying drawings.

In the descriptions of this embodiment of this application, words such as "example", "for example", or "exemplary" are used to represent giving an example, an illustration, or a description. Any embodiment or design scheme described as an "example", "for example", or "exemplary" in embodiments of this application should not be explained as being more preferred or having more advantages than another embodiment or design scheme. Exactly, use of the word "example", "for example", "exemplary", or the like is intended to present a relative concept in a specific manner.

In the descriptions of embodiments of this application, the term "and/or" describes only an association relationship for describing associated objects and represents that three relationships may exist. For example, A and/or B may represent the following three cases: Only A exists, both A and B exist, and only B exists. In addition, unless otherwise specified, the term "a plurality" means two or more. For example, a plurality of systems refers to at least two systems, and a plurality of terminals refers to at least two terminals.

Moreover, the terms "first" and "second" are merely intended for a purpose of description, and shall not be understood as an indication or implication of relative importance or implicit indication of an indicated technical feature. Therefore, a feature limited by "first" or "second" may explicitly or implicitly include one or more features. The terms "include", "have", and their variants all mean "include but are not limited to", unless otherwise specifically emphasized in another manner.

For ease of understanding the technical solutions of this application, technical terms in this application are first described.

### (1) Available channel capacity

The available channel capacity is a data amount that can be transmitted by a device or may be referred to as a capacity of a channel that can be used by a device when the device transmits data on the channel.

The following describes scenarios that may be involved in this application. It may be understood that the following scenarios are merely examples for description. In some embodiments, the following scenarios may be replaced with another scenario in which the available channel capacity is changed, and solutions obtained after replacement still falls within the protection scope of this application.

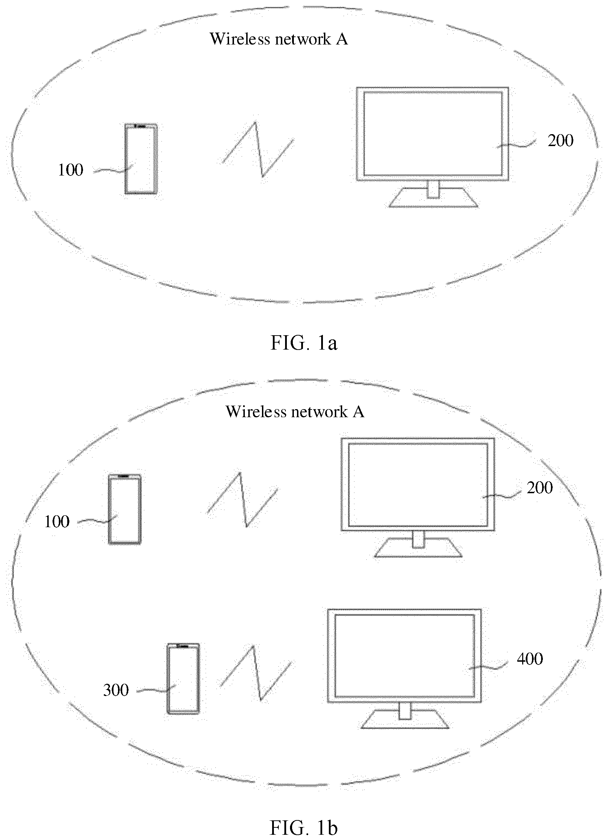

For example, FIG. 1a is a schematic diagram of a scenario according to an embodiment of this application. As shown in FIG. 1a, an environment of a wireless network A includes a plurality of devices, for example, a video transmit end 100 and a video receive end 200. The video transmit end 100 and the video receive end 200 may communicate with each other through the wireless network A. When the video transmit end 100 transmits video data to the video receive end 200, the video transmit end 100 may send the video data through a channel A (not shown in the figure). As signal quality of the wireless network A is changed, a capacity of the channel A is also changed. When the signal quality of the wireless network A is poor, the capacity of channel A also deteriorates. For example, when a signal of the wireless network A is good, the capacity of a channel A is m. When a signal of the wireless network A is poor, the capacity of the channel A may be decreased to n, where m>n. When the capacity of the channel A deteriorates because the signal of the wireless network A is poor, when the video transmit end 100 transmits the video data in the wireless network A, an available channel capacity of the video transmit end 100 on the channel A is decreased. Consequently, a transmission delay of the video data transmitted by the video transmit end 100 to the video receive end 200 increases, and the video receive end 200 cannot obtain the video data transmitted by the video transmit end 100 in time.

FIG. 1b is a schematic diagram of another scenario according to an embodiment of this application. As shown in FIG. 1b, an environment of a wireless network A includes a plurality of devices, for example, video transmit ends 100 and 300, and video receive ends 200 and 400. The video transmit end 100 and the video receive end 200 may communicate with each other through the wireless network A, and the video transmit end 200 and the video receive end 400 may communicate with each other through the wireless network A. When the video transmit end 100 transmits video data to the video receive end 200, the video transmit end 100 may send the video data through a channel A (not shown in the figure). Similarly, when the video transmit end 300 transmits video data to the video receive end 400, the video transmit end 300 may send the video data through a channel A (not shown in the figure). That is, the video transmit ends 100 and 300 contend for a channel when sending the video data. If signal quality of the wireless network A keeps in a stable state, and a capacity of the channel A is m, when only the video transmit end 100 uses the channel A to send the video data, an available channel capacity of the video transmit end 100 on the channel A is m. In a process in which the video transmit end 100 sends the video data through the channel A, if the video transmit end 200 also needs to send the video data, the video transmit end 200 may contend with the video transmit end 100 for the channel A. If the two transmit ends use the channel A for a same time period after contending for the channel A, available channel capacities of the two transmit ends on the channel A are both m/2 in a subsequent video data transmission process. In other words, when channel contention exists, the available channel capacity of the video transmit end 100 on the channel A is also decreased, and consequently, a transmission delay of the video data transmitted by the video transmit end 100 to the video receive end 200 is increased, and the video receive end 200 cannot obtain the video data transmitted by the video transmit end 100 in time.

Usually, a video coding technology, for example, scalable video coding (scalable video coding, SVC) may be used to perform layered coding on each frame of data in the video data transmitted by the video transmit end 100, to obtain one or more layers of data. Then, each layer of data is transmitted. The data obtained through layered coding may include a base layer, an enhancement layer 1, an enhancement layer 2, ..., and an enhancement layer n. Data at the base layer may enable the video receive end 200 to obtain basic video content completely and normally through decoding, but the video image obtained based on the data at the base layer may have a low frame rate, a low resolution, or low quality. When a channel is limited or a channel environment is complex, the data at the base layer can ensure that the video receive end 200 can receive a smooth video image that can be watched. The enhancement layer extracts, on the basis of the base layer, other image data that can improve basic video content included in the base layer, where the other image data is a type of data attached to image data at the base layer. When the channel environment is good or channel resources are abundant, data at the enhancement layer may be transferred, to improve a frame rate, a resolution, video quality, or the like of the basic video content included in the base layer. There may be a plurality of enhancement layers, and each layer is accumulated and combined based on previous several layers for use. The base layer is overlaid with the n enhancement layers to form a frame of clear image data. It may be understood that a larger data amount at the base layer indicates a clearer image formed by data included in the base layer. On the contrary, a smaller base layer indicates a hazier image formed by data included in the base layer. In addition, in a data transmission process, sorting of the layers has priorities. A priority of the base layer is the highest, and priorities of the enhancement layer 1 to the enhancement layer n are in descending order. It may be understood that an objective of performing layered coding on the video data is to improve a data transmission success rate and efficiency. Because an entire frame of image data is usually of a large data amount, and cannot be transmitted at a time, the entire frame of image data needs to be divided into several groups of data for transmission. However, this layered coding manner ensures that a basic requirement of image transmission without a frame loss can be met if transmission at the base layer succeeds. In an example, each layer of data may also be referred to as each layer of layered coded data.

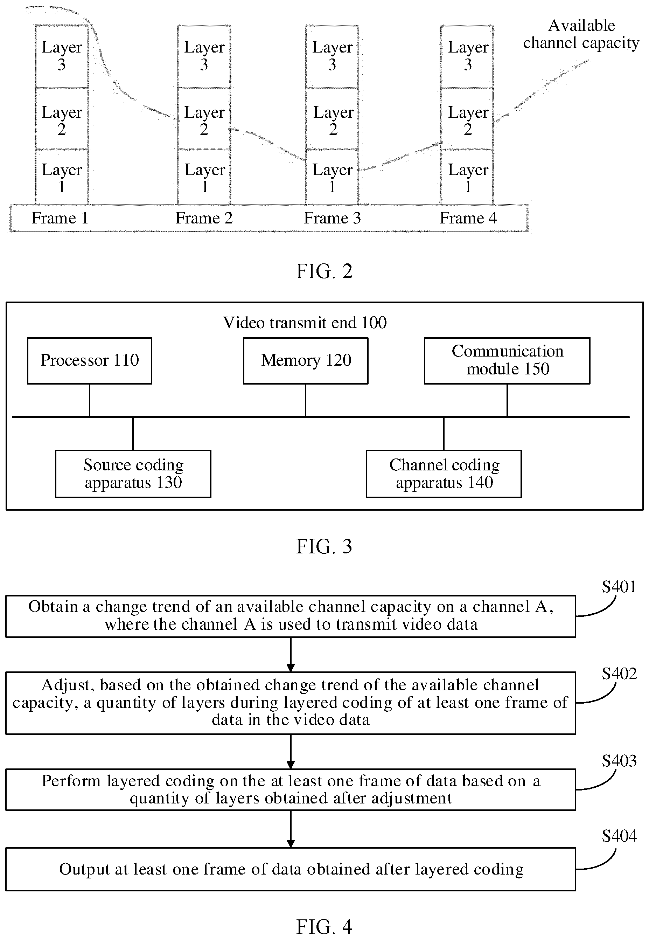

For example, as shown in FIG. 2, it is assumed that the video data sent by the video transmit end 100 to the video receive end 200 includes four frames of data, namely, a frame 1, a frame 2, a frame 3, and a frame 4. In this case, each frame of data may be divided into three layers (a layer 1 is the base layer, and a layer 2 and a layer 3 are enhancement layers) through layered coding, and each layer of data may be transmitted in sequence during transmission. Still refer to FIG. 2. When the frame 1 is sent, the available channel capacity is large. In this case, three layers of data included in the frame 1 may be sent successfully, and the video receive end 200 may play image data with a high definition. When the frame 2 is sent, the available channel capacity is small. In this case, one layer (namely, the base layer) of data included in the frame 2 may be sent successfully, and the video receive end 200 may play image data with a low definition. When the frame 3 is sent, the available channel capacity continues to deteriorate. In this case, each layer of data in the frame 3 fails to be sent. In this case, and the video receive end 200 cannot play video data normally, that is, a phenomenon, for example, frame skipping, erratic display, or frame freezing, occurs. When the frame 4 is sent, the available channel capacity gradually becomes better. In this case, one layer (namely, the base layer) of data included in the frame 4 can be sent successfully, and the video receive end 200 can play image data with a low definition. It can be learned that although this manner can reduce a probability of occurrence of the phenomenon, for example, frame skipping, erratic display, or frame freezing at the video receive end 200, when the available channel capacity of the video transmit end 100 is small, the phenomenon, for example, frame skipping, erratic display, and frame freezing, still occurs at the video receive end 200. It may be understood that an interval between two adjacent frames of data in FIG. 2 is merely for ease of description and use. In some embodiments, another frame of data that is not easily affected by the available channel capacity is also included between the two adjacent frames of data.

Further, to avoid the phenomenon, for example, frame skipping, erratic display, or frame freezing that occurs at the video receive end 200 when the available channel capacity of the video transmit end 100 is small, an embodiment of this application further provides a solution. In this solution, the video transmit end 100 may dynamically adjust, based on a change of the available channel capacity of the video transmit end 100 in a wireless network, a quantity of layers existing when layered coding is performed on each frame of data in video data, so that when the available channel capacity of the video transmit end 100 is changed, it can be ensured that at least data included in a base layer of each frame of data can be sent, and the video receive end 200 can play the video data smoothly when the available channel capacity of the video transmit end 100 is poor. This avoids a phenomenon, for example, frame skipping, erratic display, or frame freezing that occurs at the video receive end 200 when the available channel capacity of the video transmit end 100 is poor.

It may be understood that, in embodiments of this application, the video transmit end 100 may be an electronic device having a video sending function, for example, a smartphone, a tablet computer, or a notebook computer, and the video receive end 200 may be an electronic device having a video receiving function, for example, a smartphone, a tablet computer, a notebook computer, or a smart television. This is not limited in this application.

For example, FIG. 3 is a schematic diagram of a hardware structure of a video transmit end according to an embodiment of this application. As shown in FIG. 3, the video transmit end 100 may include a processor 110, a memory 120, a source coding apparatus 130, a channel coding apparatus 140, and a communication module 150. The processor 110, the memory 120, the source coding apparatus 130, the channel coding apparatus 140, and the communication module 150 may be connected through a bus or in another manner.

The processor 110 is a computing core and a control core of the video transmit end 100. The processor 110 may include one or more processing units. For example, the processor 110 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, and/or a neural network processing unit (neural-network processing unit, NPU). Different processing units may be independent components, or may be integrated into one or more processors. For example, the processor 110 may be understood as a source, and may provide video data that needs to be transmitted by the video transmit end 100.

The memory 120 may store a program, and the program may be run by the processor 110, so that the processor 110 executes instructions related to the program. The memory 120 may further store data. The processor 110 may read the data stored in the memory 120. The memory 120 and the processor 110 may be separately disposed. Optionally, the memory 120 may alternatively be integrated into the processor 110.

The source coding apparatus 130 may be configured to code the video data provided by the processor 110, to compress redundancy of the video data, and improve transmission efficiency of the video data. For example, the source coding apparatus 130 may perform layered coding on the video data by using a video coding technology, for example, SVC. For example, when performing layered coding on the video data, the source coding apparatus 130 may add an independent header identifier and/or an independent tail identifier to each layer of data obtained through layered coding, to implement layer differentiation. For example, the source coding apparatus 130 and the processor 110 may be separately disposed. Optionally, the source coding apparatus 130 may alternatively be integrated into the processor 110.

The channel coding apparatus 140 may be configured to re-code the video data coded by the source coding apparatus 130, so that obtained video data can be better transmitted on a channel. For example, the channel coding apparatus 140 may encapsulate, into an independent data frame unit, each layer of data obtained after the source coding apparatus 130 performs layered coding, to ensure that cross-layer composition does not occur in a same frame of data. For example, the channel coding apparatus 140 and the processor 110 may be separately disposed. Optionally, the channel coding apparatus 140 may also be integrated into the processor 110.

In an example, the source coding apparatus 130 may directly send the coded data to the channel coding apparatus 140. In addition, the source coding apparatus 130 may alternatively send the coded data to a data cache apparatus. Then, the channel coding apparatus 140 may read the coded data from the data cache apparatus. In addition, the source coding apparatus 130 may alternatively write the coded data into preset storage space. Then, the channel coding apparatus 140 may access the storage space to obtain the coded data.

The communication module 150 may include at least one of a mobile communication module and a wireless communication module. When the communication module 150 includes the mobile communication module, the communication module 150 may provide a wireless communication solution that includes 2G/3G/4G/5G, for example, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), and new radio (new radio, NR) and that is applied to the video transmit end 100.

When the communication module 150 includes the wireless communication module, the communication module 150 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the video transmit end 100

In addition, the communication module 150 may include at least one filter, a switch, a power amplifier, a low noise amplifier (low noise amplifier, LNA), and the like. The communication module 150 may receive an electromagnetic wave through at least one antenna, perform processing such as filtering and amplification on the received electromagnetic wave, and transmit the electromagnetic wave to a modem for demodulation. The communication module 150 may further amplify a signal modulated by the modem, and convert the signal into an electromagnetic wave through the antenna and radiate the electromagnetic wave. In some examples, at least some function modules of the communication module 150 may be disposed in the processor 110. In some examples, at least some function modules of the communication module 150 and at least some modules of the processor 110 may be disposed in a same component. The communication module 150 may be one or more components integrating at least one communication processor module. The communication module 150 receives an electromagnetic wave through the antenna, performs frequency modulation and filtering processing on the electromagnetic wave signal, and sends the processed signal to the processor 110. The communication module 150 may further receive a to-be-sent signal from the processor 110, perform frequency modulation and amplification on the to-be-sent signal, and convert the signal into an electromagnetic wave through the antenna and radiate the signal. For example, the video transmit end 100 may send, to the outside by using the communication module 150, the video data coded by the channel coding apparatus 140.

It may be understood that the structure shown in FIG. 3 in this application does not constitute a specific limitation on the video transmit end 100. In some other embodiments of this application, the video transmit end 100 may include more or fewer components than those shown in the figure, or combine some components, or split some components, or use different component arrangements. The components shown in the figure may be implemented by hardware, software, or a combination of software and hardware.

In an implementation of this application, the video receive end 200 may also have a hardware structure similar to that of the video transmit end 100 shown in FIG. 3. It may be understood that the video receive end 200 may alternatively have a hardware structure different from that of the video transmit end 100 shown in FIG. 3. Optionally, the video receive end 200 has at least a processor and a communication module. The processor may be configured to process (for example, decode) a video that is sent by the video transmit end 100 and that is received by using the communication module. The communication module may be configured to communicate with the video transmit end 100, to obtain the video data sent by the video transmit end 100. Optionally, the video receive end 200 may further have a display, and the display may be configured to display the video data.

Based on the foregoing described content and with reference to FIG. 4, the following describes in detail the technical solutions provided in this application. For example, FIG. 4 shows a procedure of a video transmission method according to an embodiment of this application. The method may be applied to the video transmit end 100, and a channel required by the video transmit end 100 when transmitting video data is a channel A. As shown in FIG. 4, the video transmission method may include the following steps.

S401: Obtain a change trend of an available channel capacity on the channel A, where the channel A is used to transmit video data.

Specifically, the video transmit end 100 may detect the channel A in real time or periodically, to obtain the change trend of the available channel capacity of the video transmit end 100 on the channel A. The channel A may be used to transmit video data. In an example, the channel A may be referred to as a first channel.

In a possible implementation, the video transmit end 100 may collect, in an entire service process (namely, a video data transmission process), statistics on a data sending success rate in a period of time (for example, 1 second or 5 seconds) in real time. When it is detected that the data sending success rate is decreased, it may be determined that the available channel capacity of the video transmit end 100 on the channel A is decreased; or when it is detected that the data sending success rate is increased, it may be determined that the available channel capacity of the video transmit end 100 on the channel A is increased.

For example, still refer to FIG. 2. During video data transmission, a frame 1 may be successfully sent, and data at a layer 1 of a frame 2 may be successfully sent, but data at another layer of the frame 2 fails to be sent, and data at each layer of a frame 3 fails to be sent. When each layer of data in the frame 1, the frame 2, and the frame 3 is successfully sent, the data sending success rate may be 100%. However, in this case, in nine layers of data included in the frame 1, the frame 2, and the frame 3, only four layers of data are successfully sent. Therefore, the data sending success rate in this case is 44.44%. It can be learned from a statistical result of the data sending success rate that, in this case, it is found that the data sending success rate trends to decrease, and therefore, it may be determined that the available channel capacity of the video transmit end on the channel is decreased.

S402: Adjust, based on the obtained change trend of the available channel capacity, a quantity of layers during layered coding of at least one frame of data in the video data.

Specifically, after obtaining the change trend of the available channel capacity of the video data transmit end 100 on the channel A, the video data transmit end 100 may dynamically adjust, based on the capacity change trend, the quantity of layers during layered coding of the at least one frame of data in the video data, to improve a transmission success rate and efficiency of the video data.

In a possible implementation, when the available channel capacity is decreased, the quantity of layers during layered coding of the at least one frame of data in the video data may be increased, that is, the at least one frame of data is divided into more layers, to decrease a data amount of a base layer. This ensures that the base layer can be successfully transmitted, and meets a requirement of basic image transmission without a frame loss.

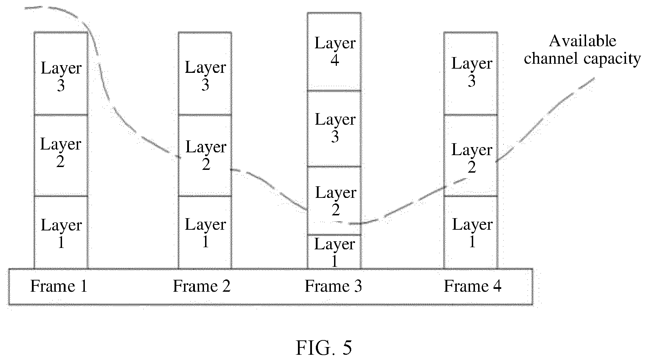

For example, still refer to FIG. 2. A layer 1 (the base layer) in the frame 3 cannot be sent (that is, fails to be sent). In this case, as shown in FIG. 5, if a quantity of layers during layered coding of the frame 3 is increased, the frame 3 is divided into four layers. In this way, a data amount of the layer 1 is decreased, and it can be ensured that the layer 1 can be successfully sent when the frame 3 is sent.

When the available channel capacity is increased, the quantity of layers during layered coding of the at least one frame of data in the video data may be decreased, that is, the at least one frame of data is divided into fewer layers, to decrease a total data amount of the at least one frame of data, and improve transmission efficiency of the video data. It may be understood that, after the at least one frame of data is layered, each layer of data has data such as matched control information and some redundant information. After the quantity of layers of the at least one frame of data is decreased, as the quantity of layers is decreased, data such as control information that match a decreased quantity of layers and some redundant information is also removed, thereby decreasing the total data amount of the at least one frame of data. In an example, when frame data is not layered, the frame data that is not layered may be understood as a base layer of the frame data, that is, in this case, the frame data does not include an enhancement layer.

For example, still refer to FIG. 2. If it is determined that the available channel capacity is increased before the frame 1 is sent, a quantity of layers during layered coding of the frame 1 may be decreased. For example, the frame 1 may not be layered, that is, a layer 1, a layer 2, and a layer 3 are combined into one layer. In this case, a total data amount of the frame 1 may be decreased.

When the available channel capacity does not change, a quantity of layers during layered coding of each frame of data in the video data may remain unchanged, that is, the quantity of layers during layered coding of each frame of data is not adjusted, to ensure stability of video data transmission. In addition, when the available channel capacity is increased, the quantity of layers during layered coding of each frame of data in the video data may also remain unchanged. This may be specifically determined according to an actual situation, and is not limited herein.

In an example, when the quantity of layers during layered coding of the at least one frame of data in the video data is adjusted, the quantity of layers may be adjusted based on a preconfigured adjustment value. For example, when it is detected for the first time that the available channel capacity is decreased, the quantity of layers may be increased by 1, when it is detected again that the available channel capacity is decreased, the quantity of layers may be increased by 1 or 2, and so on. Similarly, when it is detected for the first time that the available channel capacity is increased, the quantity of layers may be decreased by 1, when it is detected again that the available channel capacity is increased, the quantity of layers may be decreased by 1 or 2, and so on. This is not specifically limited herein.

S403: Perform layered coding on the at least one frame of data based on a quantity of layers obtained after adjustment.

Specifically, after the quantity of layers is adjusted, layered coding may be performed on the at least one frame of data based on the adjusted quantity of layers. For example, if a current quantity of layers is 3 and the adjusted quantity of layers is 5, the quantity of layers during layered coding of each frame of data is adjusted from 3 to 5. In an example, each frame of data obtained through layered coding may include at least a base layer. In this way, after the available channel capacity of the video transmit end 100 is decreased, it can be ensured that the base layer of each frame of data can be successfully sent. This meets a basic requirement of image transmission without a frame loss, and enables the video receive end to smoothly play the video data.

S404: Output at least one frame of data obtained through layered coding.

Specifically, after layered coding is performed on the at least one frame of data based on the adjusted quantity of layers, the at least one frame of data obtained through layered coding may be output. In an example, the at least one frame of data may be formed by one layer of coded data or coded data obtained through a plurality of times of layered coding.

Therefore, when transmitting the video data, the video transmit end 100 may dynamically adjust, based on a change of the available channel capacity of the video transmit end 100 on the channel, the quantity of layers for layered coding of the at least one frame of data, so that when the available channel capacity is changed, it can be ensured that at least data included in a base layer of the at least one frame of data can be sent, and the video receive end can play the video data smoothly when the available channel capacity of the video transmit end is poor. This avoids a phenomenon, for example, frame skipping, erratic display, or frame freezing that occurs at the video receive end when the available channel capacity of the video transmit end is poor.

For ease of understanding the technical solution described in FIG. 4, the following separately uses FIG. 6 and FIG. 7 as examples for description.

For example, FIG. 6 is a schematic diagram of transmission comparison between a case in which the quantity of layers of the at least one frame of data during layered coding is not dynamically adjusted and a case in which the quantity of layers of the at least one frame of data during layered coding is dynamically adjusted according to an embodiment of this application. In FIG. 6, transmission of seven frames of data is used as an example. The seven frames of data may also be replaced with another quantity of frames of data. A replacement solution still falls within the protection scope of this application.

As shown in (A) in FIG. 6, this figure is a schematic diagram of transmission in a case in which the quantity of layers of the at least one frame of data during layered coding is not dynamically adjusted based on the change of the available channel capacity during video data transmission. In (A) in FIG. 6, when the quantity of layers of the at least one frame of data during layered coding is 3. In (A) in FIG. 6, when a frame 1 is sent, the available channel capacity is high, and all data (namely, data at a layer 1, data at a layer 2, and data at a layer 3) in the frame 1 can be successfully sent. Then, the available channel capacity is tightened. In a frame 2, only data at a layer 1 is sent successfully, and data at the remaining two enhancement layers fails to be sent. Then, the available channel capacity continues to be tightened over time, and each layer of data in a frame 3 and a frame 4 fails to be sent. Then, the available channel capacity is loosened, and data at a layer 1 of a frame 5 is sent successfully, but data at a layer 2 and a layer 3 fails to be sent. Then, the available channel capacity is loosened over time, and each layer of data in a frame 6 and a frame 7 is successfully sent.

As shown in (B) in FIG. 6, this figure is a schematic diagram of transmission in a case in which the quantity of layers of the at least one frame of data during layered coding is dynamically adjusted based on the change of the available channel capacity during video data transmission. In (B) in FIG. 6, an initial quantity of layers of the at least one frame of data during layered coding is 3. In (B) in FIG. 6, when a frame 1 is sent, the available channel capacity is high, and all data (namely, data at a layer 1, data at a layer 2, and data at a layer 3) in the frame 1 can be successfully sent. Then, the available channel capacity is tightened. In a frame 2, only data at a layer 1 is sent successfully, and data at the remaining two enhancement layers fails to be sent. Then, it is detected that the available channel capacity is decreased. In this case, a quantity of layers of frame data may be increased from 3 to 5. In this way, both data at a layer 1 of a frame 3 and data at a layer 1 of a frame 4 can be sent successfully. Although data at the remaining enhancement layers fails to be sent, it is ensured that the entire frame 3 and the entire frame 4 are not lost, and therefore, the video receive end can still play the video data smoothly. Then, the available channel capacity is loosened, and data at a layer 1 and data at a layer 2 of a frame 5 is successfully sent, but data at a layer 3, data at a layer 4, and data at a layer 5 fails to be sent. Then, it is detected that the available channel capacity is increased. In this case, the quantity of layers of the frame data may be decreased from 5 to 3. In this way, all data in a frame 6 may be successfully sent. Then, it is detected that the available channel capacity is stable. In this case, the quantity of layers of the frame data may be decreased from 3 to 1 (that is, the frame data is not layered). In this way, all data in a frame 7 can be successfully sent. In this way, when it is ensured that all the data in the frame 7 can be successfully sent, a data amount of the frame 7 can also be decreased, and transmission efficiency can be improved.

It can be learned from the comparison between (A) and (B) in FIG. 6 that, dynamically adjusting, based on the change trend of the available channel capacity, the quantity of layers of the at least one frame of data during layered coding may increase the quantity of layers of the at least one frame of data during layered coding when the available channel capacity is decreased, to ensure that the at least one frame of data is not lost as a whole frame. In this way, the video receive end can smoothly play the video data. In addition, dynamically adjusting, based on the change trend of the available channel capacity, the quantity of layers of the at least one frame of data during layered coding may alternatively decrease the quantity of layers of the at least one frame of data during layered coding when the available channel capacity is increased, to decrease a data amount of an entire frame of data and improve data transmission efficiency. In addition, after the available channel capacity is continuously good, layered coding may not be performed on the at least one frame of data (which may be understood as that the quantity of layers of layered coding is 1). In this way, a calculation amount and time overheads of a related layered algorithm used when layered coding is performed on the at least one frame of data may be decreased, so that saved time may be used for data transmission and/or channel contention. This improves data transmission efficiency.

For example, FIG. 7 is a schematic diagram of a process of dynamically adjusting, based on a real-time change of the available channel capacity, the quantity of layers of the at least one frame of data during layered coding according to an embodiment of this application. In FIG. 7, for ease of description, four different time periods T1, T2, T3, and T4 are used for description. It may be understood that T1, T2, T3, and T4 may also be replaced with other time periods, and a replacement solution still falls within the protection scope of this application. In addition, in FIG. 7, transmission of eight frames of data is used as an example. The seven frames of data may also be replaced with another quantity of frames of data. A replacement solution still falls within the protection scope of this application.

As shown in FIG. 7, in the time period T 1, during transmission, the quantity of layers of the at least one frame of data during layered coding is 3, and the available channel capacity gradually deteriorates. In this case, data at a layer 1 of a frame 1 may be successfully transmitted, and data at a layer 1 of a frame 2 fails to be transmitted, that is, a frame loss occurs.

In the time period T2, because a frame loss is detected, it may be predicted that the available channel capacity is decreased. In this case, the quantity of layers of the at least one frame of data during layered coding may be dynamically adjusted to 5. In this case, an overall data amount of each frame of data is increased, but a data amount of each layer is decreased. Therefore, it can be ensured that both data at a layer 1 of a frame 3 and data at a layer 1 of a frame 4 can be successfully transmitted in the T2 time period, that is, a frame loss problem is resolved. In this case, because the quantity of layers during layered coding is increased, and data such as control information and some redundant information included in layered coded data of each increased layer enables the total data amount of each frame of data to be increased, a total data amount of the frame 3 and the frame 4 is greater than a total data amount of the frame 1.

In the time period T3, it is detected that the available channel capacity is increased, and the quantity of layers of the at least one frame of data during layered coding may be decreased to 3. In this case, the overall data amount of each frame of data is decreased, and a requirement for smooth transmission of at least a base layer may be met. In addition, data at a layer 2 of a frame 6 may also be smoothly transmitted in the time period. In this case, because the quantity of layers during layered coding is decreased, and data such as control information and some redundant information of layered coded data of each decreased layer is also removed, a total data amount of a frame 5 and a frame 6 is less than a total data amount of the frame 4.

In the time period T4, if it is detected that the available channel capacity keeps good, layered coding may be not performed on the at least one frame of data (that is, the quantity of layers is adjusted to 1). In this case, the overall data amount of each frame of data continues to be decreased. Because layered coding is not performed on the data, a calculation amount of a related layered algorithm used when layered coding is performed on the at least one frame of data may be decreased. This reduces system power consumption.

The foregoing is a related description of the video transmission method provided in this application. It may be understood that, after layered coding is performed on the at least one frame of data, each layer of data obtained through layered coding may be encapsulated into an independent data frame unit according to a specific framing policy, and is independently sent on the channel. In this way, a data amount of data sent each time can be decreased, and transmission efficiency can be improved. For example, a data amount of one frame of data is j. If data obtained through layered coding of the frame of data is not separately encapsulated, when the frame of data is sent, the frame of data whose data amount is j needs to be sent at a time. However, due to an impact of the available channel capacity, it is generally difficult to successfully send the frame of data at a time. If each layer of data obtained through layered coding is separately encapsulated and then sent, a data amount of data sent each time is decreased, for example, is changed to j/3, the separately encapsulated data may be successfully sent at a time. In an example, the data frame unit may also be referred to as a data packet.

For example, as shown in FIG. 8, when a data frame unit is obtained through encapsulation, generally, boundaries of layers are not distinguished and/or boundaries of a layer and a frame are not distinguished, and data obtained through layered coding is encapsulated into a data frame unit based on a preset data amount. As a result, one data frame unit may include data of different layers in a same frame of data. For example, a data frame unit 1 includes all of data at a layer 1 of a frame 1 and some of data at a layer 2 of a frame 2. In addition, one data frame unit may alternatively include data of different layers in two frames of data. For example, a data frame unit 4 includes data in both a frame 1 and a frame 2, and the data frame unit 4 includes some of data at a layer 3 of a frame 1 and some of data at a layer 1 of a frame 2. In an example, the data frame unit may also be referred to as a data packet.

Further, still refer to FIG. 8. Layered coding is performed on the frame 1 and the frame 2 to obtain three layers of layered coded data. In FIG. 8, during data frame unit division, some of data at a layer 1 and a layer 2 of the frame 1 is divided into one data frame unit, remaining data at the layer 2 of the frame 1 and some data at the layer 3 of the frame 1 are divided into one data frame unit, some data in remaining data at the layer 3 of the frame 1 is divided into one data frame unit, the other data in the remaining data at the layer 3 of the frame 1 and some data at the layer 1 of the frame 2 are divided into one data frame unit, remaining data at the layer 1 of the frame 2 and some data at a layer 2 of the frame 2 are divided into one data frame unit, and remaining data at the layer 2 of the frame 2 and data at a layer 3 of the frame 2 are divided into one data frame unit. In the data frame unit division manner shown in FIG. 8, when the available channel capacity is decreased, a data amount that can be transmitted on the channel within a specific time period is usually limited. As a result, data transmission cannot be completed within the time period, and a frame loss occurs.

Specifically, still refer to FIG. 8. When the layer 1 of the frame 1 is transmitted, if the available channel capacity is poor and only data at a transport layer 1 can be transmitted, because some data at the layer 1 and the layer 2 of the frame 1 is aggregated into one data frame unit for sending, the data frame unit cannot be normally sent, and a frame loss occurs.

When a data frame unit 3 is transmitted, if a life cycle of the frame 1 ends when transmission of the data frame unit 3 is completed, subsequently sent data of the frame 1 is considered as invalid data. In addition, because data at the layer 3 included in a data frame unit 2 and data at the layer 3 included in the data frame unit 3 are not all data at the layer 3, after receiving the data frame unit 3, the receive end cannot obtain, through decoding, related data by using the data frame unit 3. As a result, the data frame unit is also considered as invalid data, and the data frame unit occupies a channel resource needlessly. This causes a waste of the channel resource. In addition, when the layer 1 of the frame 2 is subsequently transmitted, because some data at the layer 1 of the frame 2 and some data at the layer 3 of the frame 1 are aggregated into one data frame unit for sending, when the layer 1 of the frame 2 is transmitted, some data at the layer 3 of the frame 1 is also transmitted, but the life cycle of the frame 1 has ended currently. Therefore, some data that is at the layer 3 of the frame 1 and that is transmitted this time is considered invalid data, that is, some data that is at the layer 3 of the frame 1 and that is transmitted this time occupies a channel resource. This causes a waste of the channel resource.

It may be understood that, in a data transmission process, a life cycle may be set for each frame of data, to ensure that each piece of data can be fairly sent, and a case in which a piece of data continuously occupies a channel does not occur. This improves data transmission efficiency. For example, the life cycle of each frame of data may be determined through negotiation between the video transmit end and the video receive end. For example, the life cycle of each frame of data may be 20 milliseconds or 30 milliseconds.

To avoid the problem described in FIG. 8, this application further provides another solution. In this solution, each layer of layered coded data in each frame of data is encapsulated into an independent data frame unit, to ensure that cross-layer combination does not occur in a same frame of data, and ensure that cross-frame combination does not occur between different frames of data. Specifically, when each layer of data in each frame of data is encapsulated into a data frame unit, in this solution, boundaries of layers may be distinguished and boundaries of frames may be distinguished. In this case, each layer of data in each frame of data may be encapsulated into an independent data frame unit.

For example, when a video coding technology, for example, scalable video coding (scalable video coding, SVC), is used to perform layered coding on each frame of data in the video data transmitted by the video transmit end 100, a joint source channel coding (joint source channel coding, JSCC) technology may be used to add an independent header identifier to each layer of data in each frame of data to implement layer differentiation, so that each layer of data in each frame of data can be conveniently encapsulated into an independent data frame unit. The header identifier corresponding to each layer of data may include a layer identifier and a data amount of the layer of data, to distinguish between each layer of data. In an example, an independent header identifier and an independent tail identifier may be added to each layer of data in each frame of data to implement layer differentiation, so that each layer of data in each frame of data can be conveniently encapsulated into an independent data frame unit. The header identifier corresponding to each layer of data may identify a start of the layer of data, and the tail identifier corresponding to the layer of data may identify an end of the layer of data, to distinguish between each layer of data.

For example, as shown in FIG. 9, data at a layer 1 of a frame 1 may be encapsulated into a data frame unit 1, data at a layer 2 of the frame 1 may be encapsulated into a data frame unit 2, data at a layer 3 of the frame 1 may be encapsulated into a data frame unit 3, data at a layer 1 of a frame 2 may be encapsulated into a data frame unit 4, data at a layer 2 of the frame 2 may be encapsulated into a data frame unit 5, and data at a layer 3 of the frame 2 may be encapsulated into a data frame unit 6.

It may be understood that, in this solution, each layer of data in each frame of data is sent as an independent data frame unit. Therefore, when a data amount of a layer is small, a data frame unit corresponding to the layer is also small. In this case, it is easier to ensure that data at the layer is successfully sent. When a data amount of a layer is large, a data frame unit corresponding to the layer is also large, and transmission duration of the data frame unit on the channel is also long. In this solution, data of each layer is sent as an independent data frame unit. Therefore, the data frame unit corresponding to each layer is sent only once on the channel. When the data of each layer is sent, channel contention needs to be performed only once, instead of performing channel contention for a plurality of times, as shown in (B) in FIG. 8. Consequently, total transmission duration of sending data at a layer with a large data amount is far longer than duration of transmitting data at the layer as an independent data frame unit at a time. Therefore, for a single piece of data at a layer with a large data amount, although transmission duration of the data at the layer is longer than that of data at another layer with a small data amount, the transmission duration of the data at the layer is far shorter than a transmission delay of splitting the data at the layer into a plurality of small data frame units. This reduces a risk of data transmission timeout of the data at the layer with a large data amount. In addition, because each layer of data is sent as an independent data frame unit, a pressure of a receive buffer of the video receive end is reduced, so that a case in which the video receive end receives some data at a layer first and then receives remaining data at an interval of an unspecified delay does not exist. This improves buffer utilization.

For ease of understanding, the following uses an example to describe a process of encapsulating each layer of data in each frame of data into an independent data frame unit for sending.

For example, as shown in FIG. 10, three frames of data are included, each frame of data is divided into three layers, and each layer of data in each frame of data is divided into independent data frame units. In addition, in FIG. 10, a dashed line L1 indicates a time point at which sending in a frame 1 times out. If transmission of data on a left side of the dashed line L1 is completed, it indicates that data transmission in a frame 1 does not time out. If transmission of data on a right side of the dashed line L1 is completed, it indicates that data transmission in a frame 1 times out. When transmission times out, the video receive end discards the received data even if transmission succeeds. A dashed line L2 indicates a time point at which sending in a frame 2 times out. A dashed line L3 indicates a time point at which sending in a frame 3 times out. In an example, duration between the dashed line L1 and the dashed line L2 may be understood as a life cycle (namely, a longest delay) of the frame 2.

Still refer to FIG. 10. A layer 1 and a layer 2 of the frame 1 are both successfully sent, and a layer 3 of the frame 1 is also successfully sent, but is discarded because of timeout. A layer 1, a layer 2, and a layer 3 of the frame 2 are all successfully sent. A layer 1 of the frame 3 is successfully sent, and a layer 2 and a layer 3 of the frame 3 are also successfully sent, but are discarded because of timeout. It can be seen from FIG. 10 that, in a transmission process, it can be ensured that the layer 1 of each frame of data can be successfully sent. This reduces a probability of a frame loss and improves transmission quality.

Further, still refer to FIG. 10. In FIG. 10, it can be ensured that the layer 1 of each frame of data can be successfully sent. However, because a sending timeout exists, and data sent upon timeout is invalid data, the timeout data still causes a case in which the channel is occupied by the invalid data. Therefore, when each data frame unit is sent, when the channel is obtained through contention, it may be estimated in advance whether remaining duration of a life cycle of frame data to which the data frame unit belongs meets a requirement for sending of the data frame unit. When the remaining duration does not satisfy sending of the data frame unit, the data frame unit is not sent directly (that is, the data frame unit is discarded), and a data frame unit that is after the data frame unit and that belongs to the same frame data as the previous data frame unit is not sent, to reserve a sending resource of the channel obtained through contention for another user to use, and avoid invalid occupation of the channel. In addition, the channel resource obtained through contention may alternatively be reserved for a next frame of data. In this way, the next frame of data can be sent earlier, and it can be ensured that each layer of data in the next frame of data can be successfully sent with a higher probability. In this way, the channel resource is allocated properly. For example, time required for sending the data frame unit may be obtained by using a ratio of a data amount of the data frame unit to a sending speed carried in the data frame unit.

For ease of understanding, the following uses an example for description.

For example, as shown in FIG. 11a, three frames of data are included, each frame of data is divided into three layers, and each layer of data in each frame of data is divided into independent data frame units. In addition, in FIG. 11a, a dashed line L1 indicates a time point at which sending in a frame 1 times out. If transmission of data on a left side of the dashed line L1 is completed, it indicates that data transmission in a frame 1 does not time out. If transmission of data on a right side of the dashed line L1 is completed, it indicates that data transmission in a frame 1 times out. When transmission times out, the video receive end discards the received data even if transmission succeeds. A dashed line L2 indicates a time point at which sending in a frame 2 times out. A dashed line L3 indicates a time point at which sending in a frame 3 times out. In an example, duration between the dashed line L1 and the dashed line L2 may be understood as a life cycle (namely, a longest delay) of the frame 2.

Still refer to FIG. 10 and FIG. 11a. In FIG. 10, both the layer 1 and the layer 2 of the frame 1 are successfully sent. After the layer 2 of the frame 1 is successfully sent, when the channel is obtained through contention again, remaining duration of a life cycle of the frame 1 is less than data sending duration of the layer 3 of the frame 1. Therefore, even if the layer 3 of the frame 1 can be successfully sent, the layer 3 of the frame 1 is considered as invalid data. In this case, as shown in FIG. 11a, the layer 3 of the frame 1 may be discarded, and the channel obtained through contention is provided for another user. Then, as shown in FIG. 10 and FIG. 11a, in a sending interval of the frame 2, the layer 1, the layer 2, and the layer 3 of the frame 2 are all successfully sent. Then, as shown in FIG. 10, in a sending interval of the frame 3, the layer 1 of the frame 3 may be successfully sent. After the layer 1 of the frame 3 is successfully sent, when the channel is obtained through contention again, remaining duration of a life cycle of the frame 3 is less than data sending duration of the layer 2 of the frame 3. Therefore, even if the layer 2 of the frame 3 can be successfully sent, the layer 2 of the frame 3 is considered as invalid data, that is, if the layer 2 and the layer 3 of the frame 3 are sent again at this time, the channel is invalidly occupied. In this case, as shown in FIG. 11a, the layer 2 and the layer 3 of the frame 3 may be discarded, and the channel obtained through contention is provided to another user for use. It can be learned from FIG. 10 and FIG. 11a that, in the transmission process, when the channel is obtained through contention, if remaining duration of a life cycle of a frame of data does not meet a requirement for sending one or more layers of to-be-sent data included in the frame of data, the one or more layers of to-be-sent data may not be directly sent, and the channel resource obtained through contention is provided for another user to use. This achieves an objective of properly allocating the channel resource, avoids invalid occupation, and improves data transmission efficiency.

For example, as shown in FIG. 11b, three frames of data are included, each frame of data is divided into three layers, and each layer of data in each frame of data is divided into independent data frame units. In addition, in FIG. 11b, a dashed line L1 indicates a time point at which sending in a frame 1 times out. If transmission of data on a left side of the dashed line L1 is completed, it indicates that data transmission in a frame 1 does not time out. If transmission of data on a right side of the dashed line L1 is completed, it indicates that data transmission in a frame 1 times out. When transmission times out, the video receive end discards the received data even if transmission succeeds. A dashed line L2' indicates a time point at which a frame 2 is obtained, and a dashed line L2 indicates a time point at which sending in the frame 2 times out. A dashed line L3' indicates a time point at which a frame 3 obtained, and a dashed line L3 indicates a time point at which sending in the frame 3 times out. In an example, duration between the dashed line L2' and the dashed line L2 may be understood as a life cycle (namely, a longest delay) of the frame 2, and duration between the dashed line L3' and the dashed line L3 may be understood as a life cycle (namely, a longest delay) of the frame 3.

Still refer to FIG. 10 and FIG. 11b. In FIG. 10, both the layer 1 and the layer 2 of the frame 1 are successfully sent. After the layer 2 of the frame 1 is successfully sent, when the channel is obtained through contention again, remaining duration of a life cycle of the frame 1 is less than data sending duration of the layer 3 of the frame 1. Therefore, even if the layer 3 of the frame 1 can be successfully sent, the layer 3 of the frame 1 is considered as invalid data. In this case, as shown in FIG. 11b, the layer 3 of the frame 1 may be discarded, and the layer 1 of the frame 2 is sent through the channel obtained through contention. Then, as shown in FIG. 10 and FIG. 11b, in a sending interval of the frame 2, the layer 1, the layer 2, and the layer 3 of the frame 2 are all successfully sent. Then, as shown in FIG. 10, in a sending interval of the frame 3 (namely, the life cycle of the frame 3), the layer 1 of the frame 3 may be successfully sent. After the layer 1 of the frame 3 is successfully sent, when the channel is obtained through contention again, remaining duration of a life cycle of the frame 3 is less than data sending duration of the layer 2 of the frame 3. Therefore, even if the layer 2 of the frame 3 can be successfully sent, the layer 2 of the frame 3 is considered as invalid data, that is, if the layer 2 and the layer 3 of the frame 3 are sent again at this time, the channel is invalidly occupied. In this case, as shown in FIG. 11b, the layer 2 and the layer 3 of the frame 3 may be discarded, and the obtained data of the frame 2 is sent through the channel obtained through contention. It can be learned from FIG. 10 and FIG. 11b that, in the transmission process, when the channel is obtained through contention, if remaining duration of a life cycle of a frame of data does not meet a requirement for sending one or more layers of to-be-sent data included in the frame of data, the one or more layers of to-be-sent data may not be directly sent. When a next frame of data is obtained, the next frame of data is sent in advance through the channel obtained through contention. This achieves an objective of properly allocating the channel resource, avoids invalid occupation, and improves data transmission efficiency.

For example, as shown in FIG. 12, three frames of data are included, each frame of data is divided into three layers, and each layer of data in each frame of data is divided into independent data frame units. In addition, in FIG. 12, a dashed line L 1 indicates a time point at which sending in a frame 1 times out. If transmission of data on a left side of the dashed line L 1 is completed, it indicates that data transmission in a frame 1 does not time out. If transmission of data on a right side of the dashed line L 1 is completed, it indicates that data transmission in a frame 1 times out. When transmission times out, the video receive end discards the received data even if transmission succeeds. A dashed line L2 indicates a time point at which sending in a frame 2 times out. A dashed line L3 indicates a time point at which sending in a frame 3 times out. In an example, duration between the dashed line L 1 and the dashed line L2 may be understood as a life cycle (namely, a longest delay) of the frame 2, and duration between the dashed line L2 and the dashed line L3 may be understood as a life cycle (namely, a longest delay) of the frame 3.

Still refer to FIG. 12. Both a layer 1 and a layer 2 of the frame 1 are successfully sent. After the layer 2 of the frame 1 is successfully sent, when the channel is obtained through contention again, a life cycle of the frame 1 ends. In this case, even if data at a layer 3 of the frame 1 is successfully sent, the data at the layer 3 is considered as invalid data. Therefore, the data at the layer 3 of the frame 1 is directly discarded, that is, the data at the layer 3 of the frame 1 is no longer sent. Then, the channel resource obtained through contention in this case may be allocated to the frame 2 for use, that is, data at a layer 1 of the frame 2 may be sent. When the data included in the frame 2 is sent, data at the layer 1, a layer 2, and a layer 3 of the frame 2 is all successfully sent. When data in the frame 3 is sent, a layer 1 of the frame 3 is successfully sent. After the layer 1 of the frame 3 is successfully sent, when the channel is obtained through contention again, remaining duration of the life cycle of the frame 3 is exceeded. In this case, data at a layer 2 and a layer 3 of the frame 3 is directly discarded, that is, the data at the layer 2 and the layer 3 of the frame 3 is no longer sent. Then, the channel resource obtained through contention may be allocated to a next frame of data of the frame 3 for use. In this way, some data that is considered as invalid data even if the data is successfully sent may be automatically discarded, so that a case in which the channel resource is occupied by the invalid data is avoided, and a next frame of data can be sent earlier. This ensures that each layer of data in the next frame of data can be successfully sent with a higher probability, and achieves an objective of properly allocating the channel resource.

It may be understood that, when the channel is obtained through contention, it may be estimated in advance whether remaining duration of a life cycle of frame data to which the data frame unit belongs is less than data sending duration of the data frame unit. If the remaining duration of the life cycle of the frame data to which the data frame unit belongs is less than the data sending duration of the data frame unit, the data frame unit may be discarded, a data frame unit that is after the data frame unit and that belongs to the same frame data as the previous data frame unit is discarded, and the channel source obtained through contention is reserved for the next frame of data to use, to save data sending duration and the channel resource, and improve data transmission efficiency.

For example, as shown in FIG. 13, in both (a) and (b) in FIG. 13, three frames of data are included, each frame of data is divided into three layers, and each layer of data in each frame of data is divided into independent data frame units. In addition, in FIG. 13, a dashed line L 1 indicates a time point at which sending in a frame 1 times out. If transmission of data on a left side of the dashed line L 1 is completed, it indicates that data transmission in a frame 1 does not time out. If transmission of data on a right side of the dashed line L 1 is completed, it indicates that data transmission in a frame 1 times out. When transmission times out, the video receive end discards the received data even if transmission succeeds. A dashed line L2 indicates a time point at which sending in a frame 2 times out. A dashed line L3 indicates a time point at which sending in a frame 3 times out.

As shown in (a) in FIG. 13, both a layer 1 and a layer 2 of the frame 1 are successfully sent, and a layer 3 of the frame 1 is also successfully sent, but is discarded because of timeout. Both a layer 1 and a layer 2 of the frame 2 are successfully sent, and a layer 3 of the frame 2 is also successfully sent, but is discarded because of timeout. Both a layer 1 and a layer 2 of the frame 3 are successfully sent, and a layer 3 of the frame 3 is also successfully sent, but is discarded because of timeout. In (a) in FIG. 13, after the layer 2 of the frame 1 is sent, when the channel is obtained through contention again, a life cycle of the frame 1 ends. Therefore, the layer 3 of the frame 1 sent in this case is invalid data. A case existing when the frame 1 is sent also exists when the frame 2 and the frame 3 are sent. Details are not described herein.

However, in (b) in FIG. 13, after the layer 2 of the frame 1 is sent, when the channel is obtained through contention again, it may be determined that the life cycle of the frame 1 ends. Therefore, the layer 3 of the frame 1 may not be sent (that is, the layer 3 of the frame 1 is discarded) in this case, and the layer 1 of the frame 2 is sent through the channel obtained through contention. In this way, it can be ensured, at a higher probability, that all data in the frame 2 and the frame 3 is sent. It can be seen from a comparison between (a) and (b) in FIG. 13 that, in the manner in (b) in FIG. 13, the data in the frame 2 may be sent earlier, thereby reducing a probability of timeout of sending the data of the frame 2. In addition, the data in the frame 3 may also be sent earlier, thereby reducing a probability of timeout of sending the data in the frame 3. Therefore, data transmission efficiency is improved significantly.

In an example, in a data sending process, when the channel is not obtained through contention, but a life cycle of a frame ends, and there is still unsent data in the frame, the unsent data may be discarded, that is, the unsent data is no longer sent. For example, still refer to (a) in FIG. 13. When the life cycle of the frame 1 ends, the channel is not obtained through contention. In this case, the layer 3 of the frame 1 is not sent. Therefore, the layer 3 of the frame 1 may be directly discarded, and a channel subsequently obtained through contention is used to send the data in the frame 2, thereby reducing the probability of timeout of sending the data of the frame 2. In addition, the data in the frame 3 may also be sent earlier, thereby reducing the probability of timeout of sending the data in the frame 3. Therefore, data transmission efficiency is improved significantly.

The foregoing is a related description of the video transmission method provided in this application. Based on the content described above, the following describes another video transmission method provided in an embodiment of this application.

For example, FIG. 14 shows another video transmission method according to an embodiment of this application. The method in FIG. 14 may be performed by using any apparatus, device, platform, or device cluster that has a computing and processing capability. For example, the method in FIG. 14 may be performed by the video transmit end 100 shown in FIG. 3, or may be performed by the source coding apparatus 130 in the video transmit end 100 shown in FIG. 3. Specifically, as shown in FIG. 14, the video transmission method includes the following steps.

S1401: Obtain a change trend of an available channel capacity on a first channel, where the first channel is used to transmit video data.

Specifically, in a process of sending the video data, the change trend of the available channel capacity on the first channel may be obtained in real time or periodically, where the first channel may be used to transmit the video data.

For example, in an entire service process, statistics about a data sending success rate in a period of time may be collected in real time, to obtain the change trend of the available channel capacity on the first channel. For details, refer to the foregoing descriptions in FIG. 4. Details are not described herein again.

In addition, the change trend of the available channel capacity on the first channel may alternatively be obtained by using another apparatus (for example, a processor) for determining the change trend of the available channel capacity on the first channel. This may be specifically determined according to an actual situation, and is not limited herein.

S1402: Adjust, based on the change trend of the available channel capacity, a quantity of layers during layered coding of at least one frame of data in the video data.

Specifically, after the change trend of the available channel capacity is obtained, the quantity of layers during layered coding of the at least one frame of data in the video data may be dynamically adjusted, to improve a transmission success rate and efficiency of the video data.

In a possible implementation, when the available channel capacity is decreased, the quantity of layers during layered coding of the at least one frame of data in the video data may be increased, that is, the at least one frame of data is divided into more layers, to decrease a data amount of a base layer. This ensures that the base layer can be successfully transmitted, and meets a requirement of basic image transmission without a frame loss.

When the available channel capacity is increased, the quantity of layers during layered coding of the at least one frame of data in the video data may be decreased, that is, the at least one frame of data is divided into fewer layers, to decrease a total data amount of the at least one frame of data, and improve transmission efficiency of the video data. In addition, when the available channel capacity is increased, the quantity of layers during layered coding of the at least one frame of data in the video data may also remain unchanged.

When the available channel capacity does not change, a quantity of layers during layered coding of each frame of data in the video data may remain unchanged, that is, the quantity of layers during layered coding of each frame of data is not adjusted, to ensure stability of video data transmission.

In an example, when the quantity of layers is adjusted, the quantity of layers during layered coding of the at least one frame of data may be increased or decreased based on a preset adjustment amount.

S1403: Perform layered coding on the at least one frame of data based on a quantity of layers obtained after adjustment.

Specifically, after the quantity of layers is adjusted, a technology, for example, SVC, may be used to perform layered coding on the at least one frame of data based on the adjusted quantity of layers. For example, when the adjusted quantity of layers is 5, the at least one frame of data is coded into five layers.

In addition, in order to distinguish between different layers of layered coded data, when layered coding is performed on the at least one frame of data, identification information may be added to each layer of layered coded data obtained through layered coding. The identification information may be used to distinguish between different layered coded data.

In an example, the identification information may include a layer identifier of the layered coded data and a first data amount of the layered coded data. A layer of data that is currently obtained may be determined based on the layer identifier, and that coded data whose data amount is the first data amount and that is obtained after the layer identifier is used as layered coded data of a same layer may be learned based on the first data amount.

In an example, the identification information may include a header identifier and a tail identifier of the layered coded data. The header identifier may identify a data start end of the layered coded data, the tail identifier may identify a data end of the layered coded data, and data between the header identifier and the tail identifier is coded data included in the layered coded data.

S1404: Output coded data obtained through layered coding.

Specifically, after layered coding is performed on the video data, the coded data obtained through layered coding may be output.

In an example, when the method is performed by the source coding apparatus 130 in the video transmit end 100 shown in FIG. 3, the source coding apparatus may directly send the coded data obtained through layered coding to the channel coding apparatus, so that the channel coding apparatus performs coding again. In addition, the source coding apparatus may also store the coded data obtained through layered coding in the data cache apparatus. In this way, the channel coding apparatus may read the coded data obtained through layered coding from the data cache apparatus, and perform coding again. In addition, the source coding apparatus may also write the coded data obtained through layered coding into the preset storage space. In this way, the channel coding apparatus may access the storage space, obtain the coded data obtained through layered coding, and perform coding again.

Therefore, when the change trend of the available channel capacity on the video data transmission channel is obtained, a quantity of layers during layered coding of the video data is dynamically adjusted based on the change trend of the available channel capacity, so that when the available channel capacity is changed, it can be ensured that at least data included in a base layer in at least one frame of data in the video data can be transmitted. This ensures that the video receive end can smoothly play the video data, avoids a phenomenon, for example, frame skipping, erratic display, or frame freezing that occurs at the video receive end, and improves user experience.

For example, FIG. 15 shows still another video transmission method according to an embodiment of this application. The method in FIG. 15 may be performed by using any apparatus, device, platform, or device cluster that has a computing and processing capability. For example, the method in FIG. 15 may be performed by the video transmit end 100 shown in FIG. 3, or may be performed by the channel coding apparatus 140 in the video transmit end 100 shown in FIG. 3. Specifically, as shown in FIG. 15, the video transmission method includes the following steps.

S1501: Obtain coded data obtained by performing layered coding on video data, where the layered coded video data includes at least one layer of layered coded data, each layer of layered coded data in the at least one layer of layered coded data includes identification information, and the identification information is used to distinguish between different layered coded data.

Specifically, after layered coding is performed on the video data, the coded data obtained by performing layered coding on the video data may be obtained. The layered coded video data may include the at least one layer of layered coded data, each layer of layered coded data in the at least one layer of layered coded data may include the identification information, and the identification information is used to distinguish between different layered coded data. For example, the obtained coded data may be the coded data that is output in FIG. 14 and that is obtained through layered coding.

In an example, when the method is performed by the channel coding apparatus 140 in the video transmit end 100 shown in FIG. 3, when the source coding apparatus and the channel coding apparatus in the video transmit end 100 can directly communicate with each other, the channel coding apparatus may directly obtain, from the source coding apparatus, the coded data obtained by performing layered coding on the video data. When the source coding apparatus and the channel coding apparatus in the video transmit end 100 indirectly communicate with each other, the source coding apparatus may store the coded data obtained through layered coding into the data cache apparatus, and then the channel coding apparatus may read, from the data cache apparatus, the coded data obtained by performing layered coding on the video data. In addition, the source coding apparatus may also write the coded data obtained through layered coding into the preset storage space, and then the channel coding apparatus may access the storage space to obtain the coded data obtained through layered coding.

S1502: Independently encapsulate, into a first data packet based on the identification information, coded data belonging to a same layer of layered coded data.

Specifically, after the coded data obtained by performing layered coding on the video data is obtained, the identification information may be obtained from the coded data including the identification information, so that the coded data belonging to the same layer of coded data is determined based on the identification information, and the coded data belonging to the same layer of layered coded data is independently encapsulated into the first data packet. In an example, the first data packet may also be referred to as a data frame unit.

In an example, when the identification information includes the layer identifier of the layered coded data and a first data amount of the layered coded data, when the layer identifier is obtained, statistics on a data amount of subsequently obtained coded data may be collected, to obtain a second data amount. When the second data amount is the same as the first data amount, all coded data corresponding to the second data amount is independently encapsulated into the first data packet. It may be understood that, because the first data amount is a data amount of the layered coded data, when the second data amount is equal to the first data amount, it may be determined that all coded data included in the layered coded data is obtained. In this case, the layered coded data may be encapsulated. That is, after the layer identifier is obtained, when a data amount of first coded data obtained after the layer identifier reaches the first data amount, the first coded data obtained after the layer identifier is independently encapsulated into the first data packet. For example, when the first coded data is independently encapsulated into the first data packet, the layer identifier may be encapsulated together, or the layer identifier may not be encapsulated together. This may be specifically determined according to an actual situation, and is not limited herein.

In an example, when the identification information includes the header identifier and the tail identifier of the layered coded data, after the header identifier and the tail identifier are obtained, coded data obtained after the header identifier is obtained and before the tail identifier is obtained may be independently encapsulated into the first data packet. It may be understood that, because the header identifier may identify the data start end of the layered coded data, and the tail identifier may identify the data end of the layered coded data, after the header identifier and the tail identifier are obtained, it may be determined that all the coded data included in the layered coded data is obtained. In this case, the layered coded data may be encapsulated. For example, when the obtained coded data is independently encapsulated into the first data packet, the corresponding header identifier and the corresponding tail identifier may be encapsulated together, or the corresponding header identifier and the corresponding tail identifier may not be encapsulated together. This may be specifically determined according to an actual situation, and is not limited herein.

S1503: Send the first data packet.

Specifically, after the layered coded data is independently encapsulated into the first data packet, the first data packet obtained through independent encapsulation may be sent.

Therefore, after the coded data obtained by performing layered coding on the video data is obtained, the coded data of each layer may be independently encapsulated into a data packet (which may also be referred to as a data frame unit), and the data packet is separately sent. This can ensure that cross-layer packet composition does not occur between coded data of different layers, and can also ensure that cross-frame packet composition does not occur between different frames. Further, it can be ensured that the coded data of each layer can be separately sent, and the channel needs to be contended for only once when one layer of layered coded data is sent. This avoids a case in which total transmission duration of one layer of layered coded data is excessively large because the channel needs to be contended for a plurality of times when one layer of layered coded data is sent during cross-layer packet composition, and reduces a probability of data sending timeout. In addition, because each layer of layered coded data is sent as an independent data packet, a pressure of a receive buffer of a video receive end is reduced, so that a case in which the video receive end receives some data at a layer first and then receives remaining data at an interval of an unspecified delay does not exist. This improves buffer utilization. In addition, each layer of layered coded data obtained through layered coding is independently encapsulated and sent. This avoids a case in which a failure of sending one layer of data causes a failure of sending data at another layer during synchronous sending of different layers of data. In this way, a data sending success rate is improved, and it is further ensured that the video receive end can smoothly play the video data.

In an example, when the channel is obtained through contention, if remaining duration for sending a first frame of data to which the first data packet belongs ends, to-be-sent data in the first frame of data is discarded, and a next frame of data of the first frame of data is sent through the channel obtained through contention. The first frame of data is any frame of data in the video data. When the channel is obtained through contention, if the remaining duration for sending the first frame data to which the first data packet belongs ends, the to-be-sent data that is in the first frame of data and that is subsequently sent is considered as invalid data. Therefore, if the to-be-sent data in the first frame of data continues to be sent in this case, the channel is invalidly occupied. Therefore, in this case, the to-be-sent data in the first frame of data may be discarded, and the next frame of data of the first frame of data is sent through the channel obtained through contention, so that invalid occupation of the channel can be avoided, and the next frame of data may be sent earlier. This avoids timeout of sending the next frame of data and improves data transmission efficiency.

In an example, when the channel is obtained through contention and the next frame of data of the first frame of data is obtained, if the remaining duration for sending the first frame of data to which the first data packet belongs is less than duration for sending the to-be-sent data in the first frame of data, the to-be-sent data in the first frame of data is discarded, and the next frame of data is sent through the channel obtained through contention. The first frame of data is any frame data in the video data. When the channel is obtained through contention, if the remaining duration for sending the first frame of data to which the first data packet belongs is less than the duration for sending the to-be-sent data in the first frame of data, the to-be-sent data that is in the first frame of data and that is subsequently sent definitely times out. Consequently, data sent after timeout is invalid data, and the channel is invalidly occupied when the to-be-sent data in the first frame of data is sent. Therefore, in this case, when the next frame of data of the first frame of data has been obtained, the to-be-sent data in the first frame of data may be discarded, and the next frame of data of the first frame of data is sent through the channel obtained through contention, so that invalid occupation of the channel can be avoided, and the next frame of data may be sent earlier. This avoids timeout of sending the next frame of data and improves data transmission efficiency.

In an example, when the channel is obtained through contention and the next frame of data of the first frame of data is not obtained, if the remaining duration for sending the first frame of data to which the first data packet belongs is less than duration for sending the to-be-sent data in the first frame of data, the to-be-sent data in the first frame of data is discarded, and the channel obtained through contention this time is abandoned. When the channel is obtained through contention, if the remaining duration for sending the first frame of data to which the first data packet belongs is less than the duration for sending the to-be-sent data in the first frame of data, the to-be-sent data that is in the first frame of data and that is subsequently sent definitely times out. Consequently, data sent after timeout is invalid data, and the channel is invalidly occupied when the to-be-sent data in the first frame of data is sent. Therefore, in this case, when the next frame of data of the first frame of data is not obtained, the to-be-sent data in the first frame of data may be discarded. However, after the to-be-sent data in the first frame of data is discarded, because the next frame of data of the first frame of data is not obtained, the channel is wasted. Therefore, the channel obtained through contention may be discarded, that is, a channel resource is allocated to another user. This improves data transmission efficiency on the channel.

Based on the methods in the foregoing embodiments, an embodiment of this application further provides a video transmission apparatus. FIG. 16 is a schematic diagram of a structure of a video transmission apparatus according to an embodiment of this application. As shown in FIG. 16, a video transmission apparatus 1600 includes one or more processors 1601 and an interface circuit 1602. Optionally, the video transmission apparatus 1600 may further include a bus 1603.

The processor 1601 may be an integrated circuit chip with a signal processing capability. In an implementation process, the steps of the foregoing methods may be implemented by using an integrated logic circuit of hardware in the processor 1601, or by using instructions in a form of software. The processor 1601 may be a general-purpose processor, a digital signal processor (DSP), an application-specific integrated circuit (ASIC), a field programmable gate array (FPGA) or another programmable logic device, a discrete gate or transistor logic device, or a discrete hardware component, and may implement or perform the methods and steps that are disclosed in embodiments of this application. The general-purpose processor may be a microprocessor, or the processor may be any conventional processor or the like.

The interface circuit 1602 may complete sending or receiving of data, an instruction, or information. The processor 1601 may perform processing by using the data, the instruction, or other information received by the interface circuit 1602, and send processed information by using the interface circuit 1602.

Optionally, the video transmission apparatus 1600 further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking the operation instructions (the operation instructions may be stored in an operating system) stored in the memory.

Optionally, the interface circuit 1602 may be configured to output an execution result of the processor 1601.

It should be noted that functions corresponding to each of the processor 1601 and the interface circuit 1602 may be implemented by using hardware design, may be implemented by using software design, or may be implemented by using a combination of software and hardware. This is not limited herein.

It should be understood that the steps in the foregoing method embodiments may be completed by using a logic circuit in a form of hardware or instructions in a form of software in the processor.

Based on the method in the foregoing embodiments, an embodiment of this application further provides a video transmission apparatus. FIG. 17 is a schematic diagram of a structure of a video transmission apparatus according to an embodiment of this application. As shown in FIG. 17, a video transmission apparatus 1700 may include: a first processing module 1701, configured to obtain a change trend of an available channel capacity on a first channel, where the first channel is used to transmit video data; adjust, based on the change trend of the available channel capacity, a quantity of layers during layered coding of at least one frame of data in the video data; and perform layered coding on the at least one frame of data based on a quantity of layers obtained after adjustment; and a first communication module 1702, configured to output coded data obtained through layered coding.

In an example, the first processing module 1701 is further configured to: when the available channel capacity trends to decrease, increase the quantity of layers during layered coding of the at least one frame of data; and when the available channel capacity trends to increase, decrease the quantity of layers during layered coding of the at least one frame of data, or keep the quantity of layers during layered coding of the at least one frame of data unchanged.

In an example, the first processing module 1701 is further configured to increase or decrease, based on a preset adjustment amount, the quantity of layers during layered coding of the at least one frame of data.

In an example, the first processing module 1701 is further configured to add identification information to each layer of layered coded data obtained through layered coding. The identification information is used to distinguish between different layered coded data.

In an example, the identification information includes a layer identifier of the layered coded data and a first data amount of the layered coded data; or the identification information includes a header identifier and a tail identifier of the layered coded data.

It should be understood that the foregoing apparatus is configured to perform the methods in the foregoing embodiments, and an implementation principle and technical effect of a corresponding program module in the apparatus are similar to the descriptions in the foregoing methods. For a working process of the apparatus, refer to a corresponding process in the foregoing methods. Details are not described herein again.

Based on the methods in the foregoing embodiments, an embodiment of this application further provides a video transmission apparatus. FIG. 18 is a schematic diagram of a structure of a video transmission apparatus according to an embodiment of this application. As shown in FIG. 18, a video transmission apparatus 1800 may include: a second processing module 1801, configured to obtain coded data obtained by performing layered coding on video data, where the layered coded video data includes at least one layer of layered coded data, each layer of the at least one layer of layered coded data includes identification information, and the identification information is used to distinguish between different layered coded data; and independently encapsulate, into a first data packet based on the identification information, coded data belonging to a same layer of layered coded data; and a second communication module 1802, configured to send a first data packet.

In an example, the identification information includes a layer identifier of the layered coded data and a first data amount of the layered coded data. The second processing module 1801 is further configured to: after the layer identifier is obtained, when a data volume of first coded data obtained after the layer identifier reaches the first data amount, independently encapsulate, into the first data packet, the first coded data obtained after the layer identifier.

In an example, the identification information includes a header identifier and a tail identifier of layered coded data. The second processing module 1801 is further configured to: after the header identifier and the tail identifier are obtained, independently encapsulate, into the first data packet, coded data obtained after the header identifier is obtained and before the tail identifier is obtained.

In an example, the second processing module 1801 is further configured to: when a channel is obtained through contention, if remaining duration for sending a first frame of data to which the first data packet belongs ends, discard to-be-sent data in the first frame of data, and send a next frame of data of the first frame of data through the channel obtained through contention. The first frame of data is any frame of data in the video data.

In an example, the second processing module 1801 is further configured to: when the channel is obtained through contention and the next frame of data of the first frame of data is obtained, if the remaining duration for sending the first frame of data to which the first data packet belongs is less than duration for sending the to-be-sent data in the first frame of data, discard the to-be-sent data in the first frame of data, and send the next frame of data through the channel obtained through contention. The first frame of data is any frame of data in the video data.

In an example, the second processing module 1801 is further configured to: when the channel is obtained through contention and the next frame of data of the first frame of data is not obtained, if the remaining duration for sending the first frame of data to which the first data packet belongs is less than duration for sending the to-be-sent data in the first frame of data, discard the to-be-sent data in the first frame of data, and abandon the channel obtained through contention this time.

It should be understood that the foregoing apparatus is configured to perform the methods in the foregoing embodiments, and an implementation principle and technical effect of a corresponding program module in the apparatus are similar to the descriptions in the foregoing methods. For a working process of the apparatus, refer to a corresponding process in the foregoing methods. Details are not described herein again.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a transistor logic device, a hardware component, or any combination thereof. The general purpose processor may be a microprocessor or any conventional processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

## Claims

1. A video transmission method, wherein the method comprises:
obtaining a change trend of an available channel capacity on a first channel, wherein the first channel is used to transmit video data;
adjusting, based on the change trend of the available channel capacity, a quantity of layers during layered coding of at least one frame of data in the video data;
performing layered coding on the at least one frame of data based on a quantity of layers obtained after adjustment; and
outputting coded data obtained through layered coding.

2. The method according to claim 1, wherein the adjusting, based on the change trend of the available channel capacity, a quantity of layers during layered coding of at least one frame of data in the video data specifically comprises:
when the available channel capacity trends to decrease, increasing the quantity of layers during layered coding of the at least one frame of data; or
when the available channel capacity trends to increase, decreasing the quantity of layers during layered coding of the at least one frame of data, or keeping the quantity of layers during layered coding of the at least one frame of data unchanged.

3. The method according to claim 2, wherein the method further comprises:
increasing or decreasing, based on a preset adjustment amount, the quantity of layers during layered coding of the at least one frame of data.

4. The method according to any one of claims 1 to 3, wherein the method further comprises:
adding identification information to each layer of layered coded data obtained through layered coding, wherein the identification information is used to distinguish between different layered coded data.

5. The method according to claim 4, wherein the identification information comprises a layer identifier of the layered coded data and a first data amount of the layered coded data; or the identification information comprises a header identifier and a tail identifier of the layered coded data.

6. A video transmission method, wherein the method comprises:
obtaining coded data obtained by performing layered coding on video data, wherein the layered coded video data comprises at least one layer of layered coded data, each layer of layered coded data in the at least one layer of layered coded data comprises identification information, and the identification information is used to distinguish between different layered coded data;
independently encapsulating, into a first data packet based on the identification information, coded data belonging to a same layer of layered coded data; and
sending the first data packet.

7. The method according to claim 6, wherein the identification information comprises a layer identifier of the layered coded data and a first data amount of the layered coded data; and
the independently encapsulating, into a first data packet based on the identification information, coded data belonging to a same layer of layered coded data specifically comprises:
after the layer identifier is obtained, when a data amount of first coded data obtained after the layer identifier reaches the first data amount, independently encapsulating, into the first data packet, the first coded data obtained after the layer identifier

8. The method according to claim 6, wherein the identification information comprises a header identifier and a tail identifier of the layered coded data; and
the independently encapsulating, into a first data packet based on the identification information, coded data belonging to a same layer of layered coded data specifically comprises:
after the header identifier and the tail identifier are obtained, independently encapsulating, into the first data packet, the coded data obtained after the header identifier is obtained and before the tail identifier is obtained.

9. The method according to any one of claims 6 to 8, wherein the method further comprises:
when a channel is obtained through contention, if remaining duration for sending a first frame of data to which the first data packet belongs ends, discarding to-be-sent data in the first frame of data, and sending a next frame of data of the first frame of data through the channel obtained through contention, wherein the first frame of data is any frame of data in the video data.

10. The method according to any one of claims 6 to 9, wherein the method further comprises:
when the channel is obtained through contention and the next frame of data of the first frame of data is obtained, if the remaining duration for sending the first frame of data to which the first data packet belongs is less than duration for sending the to-be-sent data in the first frame of data, discarding the to-be-sent data in the first frame of data, and sending the next frame of data through the channel obtained through contention, wherein the first frame of data is any frame of data in the video data.

11. The method according to any one of claims 6 to 9, wherein the method further comprises:
when the channel is obtained through contention and the next frame of data of the first frame of data is not obtained, if the remaining duration for sending the first frame of data to which the first data packet belongs is less than duration for sending the to-be-sent data in the first frame of data, discarding the to-be-sent data in the first frame of data, and abandoning the channel obtained through contention this time.

12. A video transmission apparatus, comprising:
a first processing module, configured to: obtain a change trend of an available channel capacity on a first channel, wherein the first channel is used to transmit video data; adjust, based on the change trend of the available channel capacity, a quantity of layers during layered coding of at least one frame of data in the video data; and perform layered coding on the at least one frame of data based on a quantity of layers obtained after adjustment; and
a first communication module, configured to output coded data obtained through layered coding.

13. The apparatus according to claim 12, wherein the first processing module is further configured to:
when the available channel capacity trends to decrease, increase the quantity of layers during layered coding of the at least one frame of data; or
when the available channel capacity trends to increase, decrease the quantity of layers during layered coding of the at least one frame of data, or keeping the quantity of layers during layered coding of the at least one frame of data unchanged.

14. The apparatus according to claim 13, wherein the first processing module is further configured to:
increase or decrease, based on a preset adjustment amount, the quantity of layers during layered coding of the at least one frame of data.

15. The apparatus according to any one of claims 12 to 14, wherein the first processing module is further configured to:
add identification information to each layer of layered coded data obtained through layered coding, wherein the identification information is used to distinguish between different layered coded data.

16. The apparatus according to claim 15, wherein the identification information comprises a layer identifier of the layered coded data and a first data amount of the layered coded data; or the identification information comprises a header identifier and a tail identifier of the layered coded data.

17. A video transmission apparatus, comprising:
a second processing module, configured to: obtain coded data obtained by performing layered coding on video data, wherein the layered coded video data comprises at least one layer of layered coded data, each layer of layered coded data in the at least one layer of layered coded data comprises identification information, and the identification information is used to distinguish between different layered coded data; and independently encapsulate, into a first data packet based on the identification information, coded data belonging to a same layer of layered coded data; and
a second communication module, configured to send the first data packet.

18. The apparatus according to claim 17, wherein the identification information comprises a layer identifier of the layered coded data and a first data amount of the layered coded data; and
the second processing module is further configured to:
after the layer identifier is obtained, when a data amount of first coded data obtained after the layer identifier reaches the first data amount, independently encapsulate, into the first data packet, the first coded data obtained after the layer identifier

19. The apparatus according to claim 17, wherein the identification information comprises a header identifier and a tail identifier of the layered coded data; and
the second processing module is further configured to:
after the header identifier and the tail identifier are obtained, independently encapsulate, into the first data packet, the coded data obtained after the header identifier is obtained and before the tail identifier is obtained.

20. The apparatus according to any one of claims 17 to 19, wherein the second processing module is further configured to:
when a channel is obtained through contention, if remaining duration for sending a first frame of data to which the first data packet belongs ends, discard to-be-sent data in the first frame of data, and send a next frame of data of the first frame of data through the channel obtained through contention, wherein the first frame of data is any frame of data in the video data.

21. The apparatus according to any one of claims 17 to 20, wherein the second processing module is further configured to:
when the channel is obtained through contention and the next frame of data of the first frame of data is obtained, if the remaining duration for sending the first frame of data to which the first data packet belongs is less than duration for sending the to-be-sent data in the first frame of data, discard the to-be-sent data in the first frame of data, and send the next frame of data through the channel obtained through contention, wherein the first frame of data is any frame of data in the video data.

22. The apparatus according to any one of claims 17 to 20, wherein the second processing module is further configured to:
when the channel is obtained through contention and the next frame of data of the first frame of data is not obtained, if the remaining duration for sending the first frame of data to which the first data packet belongs is less than duration for sending the to-be-sent data in the first frame of data, discard the to-be-sent data in the first frame of data, and abandon the channel obtained through contention this time.

23. A video transmission apparatus, comprising at least one processor and an interface, wherein
the at least one processor obtains program instructions or data through the interface; and
the at least one processor is configured to execute the program instructions, to implement the method according to any one of claims 1 to 5, or implement the method according to any one of claims 6 to 11.

24. A computer storage medium, wherein the computer storage medium stores instructions, and when the instructions are run on a computer, the computer is enabled to perform the method according to any one of claims 1 to 5, or perform the method according to any one of claims 6 to 11.

25. A computer program product comprising instructions, wherein when the instructions are run on a computer, the computer is enabled to perform the method according to any one of claims 1 to 5, or perform the method according to any one of claims 6 to 11.
